(19) **Europäisches Patentamt**
**European Patent Office**
**Office européen des brevets**

(11) **EP 2 972 672 B1**

(12) **EUROPEAN PATENT SPECIFICATION**

(45) Date of publication and mention
of the grant of the patent:
**24.10.2018 Bulletin 2018/43**

(51) Int Cl.:
*G06F 3/01* (2006.01)       *G06F 3/03* (2006.01)
*G06F 3/0485* (2013.01)

(21) Application number: **14716134.3**

(86) International application number:
**PCT/US2014/024080**

(22) Date of filing: **12.03.2014**

(87) International publication number:
**WO 2014/150725 (25.09.2014 Gazette 2014/39)**

(54) **DETECTION OF A GESTURE PERFORMED WITH AT LEAST TWO CONTROL OBJECTS**

ERKENNUNG EINER MIT MINDESTENS ZWEI KONTROLLOBJEKTEN AUSGEFÜHRTEN GESTE

DÉTECTION D'UN GESTE RÉALISÉ AVEC AU MOINS DEUX OBJETS DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201313840974**

(43) Date of publication of application:
**20.01.2016 Bulletin 2016/03**

(73) Proprietor: **Qualcomm Incorporated**
**San Diego, CA 92121-1714 (US)**

(72) Inventors:
• **EVERITT, Andrew J.**
**San Diego, California 92121-1714 (US)**

• **WARD, Jonathan D.**
**San Diego, California 92121-1714 (US)**
• **CHRISTIANSEN, Nadine B.**
**San Diego, California 92121-1714 (US)**

(74) Representative: **Schmidbauer, Andreas Konrad**
**Wagner & Geyer Partnerschaft**
**Patent- und Rechtsanwälte**
**Gewürzmühlstrasse 5**
**80538 München (DE)**

(56) References cited:
**US-A1- 2009 146 951      US-A1- 2012 218 203**
**US-A1- 2012 249 416**

**Description**

BACKGROUND

Aspects of the disclosure relate to computer interfaces. In particular, a gesture interface and associated systems and methods are described that detect gestures performed with at least two control objects.

Standard interfaces for display devices typically involve physical manipulation of an electronic input. A television remote control involves pushing a button. A touch screen display interface involves detecting the touch interaction with the physical surface. Such interfaces have numerous drawbacks. As an alternative, a person's movements may be used to control electronic devices. A hand movement or movement of another part of the person's body can be detected by an electronic device and used to determine a command to be executed by the device (e.g., provided to an interface being executed by the device) or to be output to an external device. Such movements by a person may be referred to as a gesture. Gestures may not require the person to physically manipulate an input device.

The document US 2009/146951 A1 discloses a method and an apparatus that uses motion dots comprising multiple accelerometers attached to user's fingers, e.g. the thumb and the index finger, and capable of detecting a physical location of the fingers and the relative movements between the fingers. A first hand gesture may be relating to a panning motion, when the gesture is performed with two fingers having and keeping a fixed relative distance between each other during the motion. A second hand gesture may relate to a zoom out command, when the index finger and the thumb finger spread apart.

The document US 2012/249416 A1 discloses systems and methods for rendering images in a virtual or augmented reality system that may include capturing scene images of a scene in a vicinity of a first and a second projector, capturing spatial data with a sensor array in the vicinity of the first and second projectors, analyzing captured scene images to recognize body parts, and projecting images from each of the first and the second projectors with a shape and orientation determined based on the recognized body parts. Additional rendering operations may include tracking movements of the recognized body parts, applying a detection algorithm to the tracked movements to detect a predetermined gesture, applying a command corresponding to the detected predetermined gesture, and updating the projected images in response to the applied command. The command may be using two hands with palms open for panning images. The document US 2012/218203 A1 discloses an electronic blackboard including a display panel and a touch panel for detecting multi-touch gestures. An image may be scrolled when positions of multi-touch gesture move in one same direction, and a page is switched when, after detection of multi-touch input, a finger is moved away. Whether to scroll or switch the page depends on the amount of movement of the multi-touch inputs being, respectively, smaller/equal or larger than a threshold value.

BRIEF SUMMARY

According to the present invention, a method as set forth in claim 1, a system as set forth in claim 14 and a non-transitory computer readable instruction medium as set forth in claim 15 are provided. Preferred embodiments of the invention are claimed in the dependent claims. These and other embodiments are further detailed below. The scope of the invention is defined by the claims.

Certain embodiments are described related to a contactless panning gesture. In some embodiments a method may involve remotely detecting, using a remote detection device, at least two control objects and initiating a panning gesture movement mode by detecting a panning gesture initiating command. The method may then involve remotely detecting, using the remote detection device, synchronized movement of the at least two control objects across a control plane parallel to a content surface, wherein the content surface displays a portion of a content, and adjusting the portion of the content displayed on the content surface in response to the detection of the synchronized movement of the at least two control objects across the control plane. Such a method may then further involve ending the panning gesture movement mode by remotely detecting, using the remote detection device, a panning disengagement motion.

In certain methods according to one potential embodiment, detecting the panning disengagement motion comprises detecting that one of the at least two control objects has been removed from the control plane. In certain methods according to another potential embodiment, detecting the panning disengagement motion comprises detecting that a movement of the at least two control objects relative to each other has exceeded a predetermined threshold. In certain methods according to another potential embodiment, the predetermined threshold is defined by: threshold =((MAX_TOLERANCE - MIN_TOLERANCE) * factor) + MIN_TOLERANCE; where the tolerance levels are system design values, and the factor value is based on a control object speed.

In certain methods according to another potential embodiment the factor value is further based a stationary control object shake measurement associated with a user. In certain methods according to another potential embodiment, the control object speed is averaged over multiple control speed measurements to compensate for jitter. In certain methods according to another potential embodiment, the remote detection device is a camera mounted to a user's head.

In certain methods according to another potential embodiment, the remote detection device comprises an optical camera, a stereo camera, or a depth camera. In certain methods according to another potential embodiment, wherein the remote detection device comprises a hand mounted inertial sensor. In certain methods according to another potential embodiment, the panning gesture initiating command comprises detecting, using the remote detection device, that the at least two control objects have each been placed in a level position in the control plane parallel to the content surface for a predetermined amount of time.

Another potential embodiment is an apparatus that includes a processing module, storage, and an image capture module. In such an apparatus, the storage comprises computer readable instructions that cause a processor to perform a method according to various embodiments. One such embodiment comprises remotely detecting at least two control objects; initiating a panning gesture movement mode by detecting a panning gesture initiating command; remotely detecting, using the remote detection device, synchronized movement of the at least two control objects across a control plane parallel to a content surface, wherein the content surface displays a portion of a content; adjusting the portion of the content displayed on the content surface in response to the detection of the synchronized movement of the at least two control objects across the control plane; and ending the panning gesture movement mode by remotely detecting, using the remote detection device, a panning disengagement motion.

In further embodiments, the apparatus may further include an audio sensor; and a speaker. In such embodiments, the panning gesture initiating command may comprise a voice command received via the audio sensor. In still further embodiments, the apparatus may further include an antenna; a cellular telephone communication module; and a local area network module. The content in such an embodiment may be communicated to the content surface from the display output module via the local area network module. In still further embodiments, the apparatus may further include a head mounted device comprising a first camera that is communacatively coupled to the computer processor.

Another potential embodiment involves a system that may include a first camera and a first computing device communicatively coupled to the first camera. The system may further include an output display communicatively coupled to the first computing device, and the first computing device may comprise a gesture analysis module that identifies at least two control objects and tracks a synchronized movement of the at least two control objects across a control plane that is parallel to a content surface of the output display, wherein the identifying and tracking uses a plurality of images from the first camera, In further embodiments, the first computing device comprises a content control module that outputs a content to the output display, identifies details of the content including a current content position, and adjusts the current content position of the content in response to the tracking of the synchronized movement of the at least two control objects across the control plane.

In further embodiments, the system may additionally include a second camera communicatively coupled to the first computing device. In such embodiments, when the gesture analysis module an obstructed control object by identifying an obstruction between the first camera and at least one of the at least two control objects; and may detect movement of the obstructed control object as part of the synchronized movement of the at least two control objects using a second plurality of images from the second camera.

One potential embodiment comprises a method for determining disengagement of an input mode, the method comprising: determining that an input mode for a computer system has been engaged; affecting operation of the computer system based on detected movement of at least two control objects during the input mode; and determining that the input mode has been disengaged based on a separation between the at least two control objects, wherein an amount of the separation which causes the disengagement varies.

Additional such embodiments may function where the amount of the separation varies based on a speed of the motion or a distance traveled by the at least two control objects. In further alternative embodiments, additional variables may be used to determine the separation amount. In further embodiments, a speed of each control object is used to determine the distance traveled. In further embodiments, position measurements may be used to determine the separation. In further embodiments, the separation threshold may be based both on the distance traveled by the two control objects and the speed of each control object.

In further embodiments, a method of engaging an input mode comprises detecting a plurality of control objects being substantially still for threshold amount of time. In further such embodiments, a method of engaging an input mode may comprise detecting that the plurality of control objects are held still and approximately in same plane. In further embodiments a method of engaging an input mode may comprise determining that the plurality of control objects are roughly parallel to content or a content surface. In further embodiments a method of engaging an input mode may comprise determining that the plurality of control objects are within a predetermined volume.

Additional embodiments may comprise presenting content arranged on real surface or virtual surface, identifying an engagement input where a plurality of control objects are held still in a same pose or in a specific predetermined pose. In further such embodiments, removal of the control objects from a content surface along a vector perpendicular to a plane of the content surfaces comprises a disengagement command.

Additional embodiment may comprise displaying content, identifying a synchronous movements of the plurality of control objects to affect the content, wherein the affecting comprises adjusting the displayed context based on the detected movement. In further such embodiments, the adjusting comprises panning, and the panning matches the detected synchronous movement of the plurality of control objects. In additional further embodiments, the synchronous detected movement is approximately parallel to content. In additional embodiments, the plurality of control objects are hands of a user. In further embodiments, detection and identification of movement of the control objects is performed by a camera. In various embodiments, such a camera comprises a 2D camera, a stereo camera, a depth perception camera. In alternate embodiments, the camera may be a remote detection device which determines a location using an inertial movement unit, infrared detectors, acoustic motion detection, or any other such means of determining movement and position of a plurality of control objects.

Another potential embodiment may comprise a method for detecting a command to a computer system, the method comprising: detecting motion by at least two control objects; determining whether a separation between the at least two control objects is within a variable threshold throughout the motion; and determining whether the motion comprises a command to the computer system based on whether the separation is within the variable threshold. In further alternative embodiments of such a method, the method may function where the threshold varies based on a speed of the motion or a distance traveled by the at least two variable based on only speed. In further alternative embodiments of such a method, the method may function where the threshold varies based on distance only. In further alternative embodiments of such a method, the method may function where the threshold varies based on a combination of speed and distance. In further alternative embodiments of such a method, the method may function where the control objects are hands of a user detect by camera (2d, stereo, ToF, depth, etc.). In further embodiments, detection may be done by an inertial detection unit, and infrared radar unit, or other such detection means.

In further alternative embodiments of such a method, the method may additionally comprise determining whether the motion comprises a command further comprises determining whether the motion is substantially planar. In further alternative embodiments of such a method, the method may additionally comprise determining whether the plane is substantially parallel to displayed content. In further alternative embodiments of such a method, the method may additionally comprise a pan movement, further comprising causing displayed content to translate. In additional such embodiments, detected motion of the control objects comprises a substantially linear motion substantially parallel to content. In additional such embodiments, motion comprises a circle by at least one of the control objects further comprising determining that motion is within a threshold in a z-direction wherein the z-direction threshold is variable based on speed and/or total distance traveled. In certain embodiments, the z-direction threshold may be based on a range of extension of a user's hands. In additional embodiments, the z-direction threshold may be based on a speed of the user's hands. In further embodiments, the z-direction threshold may be based on any combination of a speed of the user's hands, a range of extension of the user's hands, and an offset from a resting position of the user's hands.

An additional embodiment may comprise a method for detecting a command to a computer system, the method comprising: detecting motion by at least two control objects; and determining whether the motion comprises a command to a computer system based on a separation between the at least two control objects throughout at least a portion of the motion. Still further embodiments may function where the determining is based on whether the separation is within a variable threshold throughout at least the portion of the motion. Still further embodiments may function where the threshold varies based on a speed of the motion or a distance traveled by the at least two variable based on only speed. Still further embodiments may function where the variable is based on only distance. Still further embodiments may function where the variable is based on a combination of speed and distance.

One potential embodiment may be a method comprising: detecting a gesture initiating command performed by at least two control objects based on information from one or more detection devices; initiating a gesture mode based on the detection of the gesture initiating command; detecting, based on information from the one or more detection devices, substantially synchronized movement of the at least two control objects across a control plane substantially parallel to a surface on which content is displayed; causing the displayed content to be adjusted in response to the detection of the substantially synchronized movement of the at least two control objects across the control plane; and ending the gesture mode by detecting, using information from the one or more detection devices, a disengagement motion.

Additional embodiments of such a method may function where detecting the disengagement motion comprises detecting that a movement of the at least two control objects relative to each other has exceeded a variable threshold. Additional embodiments of such a method may function where the variable threshold is defined by a difference between a minimum control object tolerance, a maximum control object tolerance, and a calibrating factor. Additional embodiments of such a method may function where the minimum control object tolerance is a minimum extension of a user hand; wherein the maximum control object tolerance is a maximum extension of the user hand; and the calibrating factor is a variable that depends at least in part on a distance of the hand from a neutral position.

Additional embodiments of such a method may function where the calibrating factor is based on a stationary control object shake measurement associated with a user. Additional embodiments of such a method may function where the calibrating factor is based on a speed of the at least two control objects. Additional embodiments of such a method may function where the speed of the at least two control objects is averaged over multiple control speed measurements to compensate for jitter. Additional embodiments of such a method may function where detecting the panning disengagement motion comprises detecting that one of the at least two control objects has been removed from the control plane. Additional embodiments of such a method may function where the control objects comprise hands of a user, and the one or more detection devices comprise a camera mounted to the user's head.

Additional embodiments of such a method may function where the control objects comprise hands of the user, and wherein the one or more detection devices comprise hand mounted inertial sensors. Additional embodiments of such a method may function where detecting the gesture initiating command comprises detecting, based on information from the one or more remote detection devices, that the at least two control objects have each been placed in a level position in the control plane parallel to the content surface for a predetermined amount of time.

Additional embodiments of such a method may function where the surface on which content is displayed is a virtual surface created by a computing device and projected into a viewing area of a user. Additional embodiments of such a method may function where the surface on which content is displayed is a passive physical surface, wherein the content is projected into an eye of the user by a head mounted device and matched to the passive physical surface by a computing device that sets the passive physical surface as the surface on which content is displayed. Additional embodiments of such a method may function where the content is displayed on the passive physical surface only for a single user of the head mounted device. Additional embodiments of such a method may function where the content is displayed on the passive physical surface for a first plurality of users of head-mounted devices and is not displayed on the passive physical surface for a second plurality of users of head-mounted devices.

Additional embodiments of such a method may function where the surface on which the content is displayed is a television display. Additional embodiments of such a method may function where the gesture initiating command performed by the at least two control objects comprises a grabbing motion by two hands of a user in a control plane; and wherein the disengagement motion comprises a releasing motion by the two hands of the user in the control plane.

An additional embodiment may be an apparatus comprising: a processing module comprising a computer processor; a computer readable storage medium coupled to the processing module; a display output module coupled to the processing module; and an image capture module coupled to the processing module; wherein the computer readable storage medium comprises computer readable instructions that, when executed by the computer processor, cause the computer processor to perform a method comprising: detecting a gesture initiating command performed by at least two control objects based on information from one or more detection devices; initiating a gesture mode based on the detection of the gesture initiating command; detecting, based on information from the one or more detection devices, substantially synchronized movement of the at least two control objects across a control plane substantially parallel to a surface on which content is displayed; causing the displayed content to be adjusted in response to the detection of the substantially synchronized movement of the at least two control objects across the control plane; and ending the gesture mode by detecting, using information from the one or more detection devices, a disengagement motion,

Additional embodiments of such an apparatus may comprise an audio sensor; and a speaker; wherein the panning gesture initiating command comprises a voice command received via the audio sensor. Additional embodiments of such an apparatus may comprise an antenna; and a local area network module; wherein the content is communicated to the content surface from the display output module via the local area network module.

Additional embodiments of such an apparatus may comprise a head mounted device comprising a first camera that is communacatively coupled to the computer processor. Additional embodiments of such an apparatus may function where detecting the disengagement motion comprises detecting that a movement of the at least two control objects relative to each other has exceeded a variable threshold.

Additional embodiments of such an apparatus may function where the variable threshold is defined by a difference between a minimum control object tolerance, a maximum control object tolerance, and a calibrating factor. Additional embodiments of such an apparatus may function where the minimum control object tolerance is a minimum extension of a user hand; wherein the maximum control object tolerance is a maximum extension of the user hand; and wherein the calibrating factor is a variable that depends at least in part on a distance of the hand from a neutral position.

Additional embodiments of such an apparatus may function where the calibrating factor is based on a stationary control object shake measurement associated with a user. Additional embodiments of such an apparatus may function where detecting the panning disengagement motion comprises detecting that one of the at least two control objects has been removed from the control plane. Additional embodiments of such an apparatus may function where the control objects comprise hands of a user, and the one or more detection devices comprise a camera mounted to the user's head. Additional embodiments of such an apparatus may function where the surface on which content is displayed is a virtual surface created by a computing device coupled with the camera as a head mounted device (HMD).

Additional embodiments of such an apparatus may function where the surface on which content is displayed is a passive physical surface, wherein the content is projected into an eye of the user by a head mounted device and matched to the passive physical surface by a computing device that sets the passive physical surface as the surface on which content is displayed. Additional embodiments of such an apparatus may function where the gesture initiating command performed by the at least two control objects comprises a grabbing motion by two hands of a user in a control plane; and wherein the disengagement motion comprises a releasing motion by the two hands of the user in the control plane.

Another embodiment may be a system comprising means for detecting a gesture initiating command performed by at least two control objects based on information from one or more detection devices; means for initiating a gesture mode based on the detection of the gesture initiating command; means for detecting, based on information from the one or more detection devices, substantially synchronized movement of the at least two control objects across a control plane substantially parallel to a surface on which content is displayed; means for causing the displayed content to be adjusted in response to the detection of the substantially synchronized movement of the at least two control objects across the control plane; and means for ending the gesture mode by detecting, using information from the one or more detection devices, a disengagement motion.

In further alternative embodiments, such a system may additionally comprise means for detecting that a movement of the at least two control objects relative to each other has exceeded a variable threshold. In further alternative embodiments, such a system may additionally comprise means for determining the variable threshold by determining a difference between a minimum control object tolerance, a maximum control object tolerance. In further alternative embodiments, such a system may additionally comprise means for determining a calibration factor for the variable threshold. In further alternative embodiments, such a system may additionally comprise means for determining a minimum extension of a user hand; means for determining a maximum extension of the user hand; and means for determining a distance of the hand from a neutral position.

In further alternative embodiments, such a system may additionally comprise means for determining a stationary control object shake measurement associated with a user. In further alternative embodiments, such a system may additionally comprise means for determining a speed of the at least two control objects. In further alternative embodiments, such a system may additionally comprise means for detecting that one of the at least two control objects has been removed from the control plane. In further alternative embodiments, such a system may additionally comprise means for detecting, based on information from the one or more remote detection devices, that the at least two control objects have each been placed in a level position in the control plane parallel to the content surface for a predetermined amount of time. In further alternative embodiments, such a system may additionally comprise means for creating a virtual surface. In further alternative embodiments, such a system may additionally comprise means for projecting a virtual surface into a viewing area of a user.

While various specific embodiments are described, a person of ordinary skill in the art will understand that elements, steps, and components of the various embodiments may be arranged in alternative structures while remaining within the scope of the description. Also, additional embodiments will be apparent given the description herein, and thus the description is not referring only to the specifically described embodiments, but to any embodiment capable of the function or structure described herein.

BRIEF DESCRIPTION OF THE DRAWINGS

Aspects of the disclosure are illustrated by way of example. In the accompanying figures, like reference numbers indicate similar elements, and:

FIG. 1A illustrates an environment including a system that may incorporate one or more embodiments;

FIG. 1B illustrates an environment including a system that may incorporate one or more embodiments;

FIG. 1C illustrates an environment including a system that may incorporate one or more embodiments;

FIG. 2A illustrates an environment that may incorporate one or more embodiments;

FIG. 2B illustrates an aspect of a contactless gesture that may be detected in one or more embodiments;

FIG. 2C illustrates an aspect of a contactless gesture that may be detected in one or more embodiments;

FIG. 3 illustrates one aspect of a method that may incorporate one or more embodiments;

FIG. 4 illustrates one aspect of a system that may incorporate one or more embodiments;

FIG. 5A illustrates one aspect of a system including a head mounted device that may incorporate one or more embodiments; and

FIG. 5B illustrates one aspect of a system that may incorporate one or more embodiments; and

FIG. 6 illustrates an example of a computing system in which one or more embodiments may be implemented.

DETAILED DESCRIPTION

Several illustrative embodiments will now be described with respect to the accompanying drawings, which form a part hereof. While particular embodiments, in which one or more aspects of the disclosure may be implemented, are described below, other embodiments may be used and various modifications may be made without departing from the scope of the disclosure.

Embodiments are directed to display interfaces. In certain embodiments, contactless interfaces and an associated method for control of content in a display using a contactless interface are described. As the input devices and computing power available to users continues to increase, using gestures and in particular free-air gestures to interact with content surfaces is desirable in some situations. One potential navigation interaction involves navigating around large content items using a free-air panning gesture which may be made relative to a content surface, such as a liquid crystal or plasma display surface. A content surface may also be an arbitrary surface onto which an image is projected by a projector, or upon which an image appears to be projected using, for example, glasses that transmit an image to the user's eyes showing an image that appears to be upon the arbitrary surface. While a gesture may be made while a control object is in contact with a display surface, detection of the gesture is not based on any detection at the surface, but is instead based on detection of a remote control object such as the user's hands by a detection device, as detailed further below. In some embodiments, a gesture may be detected by a handheld device, such as a controller or apparatus comprising an inertial measurement unit (IMU). Thus, a device used to detect a gesture may not be remote with respect to the user, but such device and/or gesture may be remote with respect to the display interfaces.

In one example embodiment, a wall mounted display is coupled to a computer, which is in turn further coupled to a camera. When a user interacts with the display from a location that is in view of the camera, the camera communicates images of the user to the computer. The computer recognizes gestures made by the user, and adjusts the presentation of content shown at the display in response to gestures of the user. A particular panning gesture may be used, for example. In one implementation of the panning gesture, the user places both hands in a control plane that is substantially parallel to the display surface. The user then moves his or her hands in a substantially synchronized motion through the control plane. The camera captures images of this gesture, and communicates them to the computer, where they are processed. The content on the display is shown to pan in conjunction with the synchronized motion of the user's hands. In a further detailed embodiment, if the control plane is at the surface of the content display, the portion of the content next to or roughly touching each hand will remain next to each hand as the hands move, as if the user was touching the content and pushing it around the display surface. Additional details are described below.

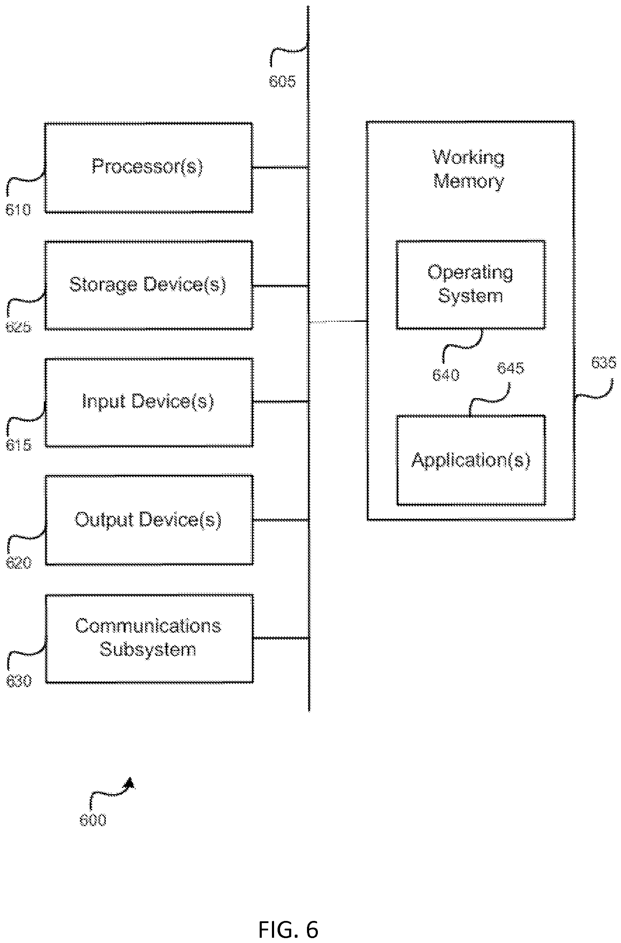

As used herein, the terms "computer," "personal computer" and "computing device" refer to any programmable computer system that is known or that will be developed in the future. In certain embodiments a computer will be coupled to a network such as described herein. A computer system may be configured with processor-executable software instructions to perform the processes described herein. FIG. 6 provides additional details of a computer as described below.

As used herein, the term "component," "module," and "system," is intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server may be a component. One or more components may reside within a process and/or thread of execution and a component may be localized on one computer and/or distributed between two or more computers.

As used herein, the term "gesture" refers to a movement through space over time made by a user. The movement may be made by any control object under the direction of the user.

As used herein, the term "control object" may refer to any portion of the user's body, such as the hand, arm, elbow, or foot. The gesture may further include a control object that is not part of the user's body, such as a pen, a baton, or an electronic device with an output that makes movements of the device more readily visible to the camera and/or more easily processed by a computer coupled to the camera. Embodiments may use more than one control object, and in such embodiments, the two or more control objects need not be identical. For example, one control object may be an electronic device, and a second control object may be a hand of the user.

As used herein, the term, "remote detection device" refers to any device capable of capturing data associated with and capable of being used to identify a gesture. In one embodiment, a video camera is an example of a remote detection device which is capable of conveying the image to a processor for processing and analysis to identify specific gestures being made by a user. A remote detection device such as a camera may be integrated with a display, a wearable device, a phone, or any other such camera presentation. The camera may additionally comprise multiple inputs, such as for a stereoscopic camera, or may further comprise multiple units to observe a greater set of user locations, or to observe a user when one or more camera modules are blocked from viewing all or part of a user. A remote detection device may detect a gesture using any set of wavelength detection. For example, a camera may include an infrared light source and detect images in a corresponding infrared range. Remote detection may also be done by other means, including body mounted motion detectors, ultraviolet or other electromagnetic radiation detectors, ultrasound or other audio remote detection techniques, or MEMS sensors, any of which may be used to remotely capture data associated with a gesture.

As used herein, the term "display" and "content surface" refer to an image source of data being viewed by a user. Examples include liquid crystal televisions, cathode ray tube displays, plasma display, and any other such image source. In certain embodiments, the image may be projected to a user's eye rather than presented from a display screen. Irs such embodiments, the system may present the content to the user as if the content was originating from a surface, even though the surface is not emitting or reflecting the light. One example is a pair of glasses as part of a head mounted device that provides images to a user.

As used herein, the term "head mounted device" (HMD) or "body mounted device" (BMD) refers to any device that is mounted to a user's head, body, or clothing or otherwise worn or supported by the user. For example, an HMD or a BMD may comprise a device that captures image data and is linked to a processor or computer. In certain embodiments, the processor is integrated with the device, and in other embodiments, the processor may be remote from the HMD. In an embodiment, the head mounted device may be an accessory for a mobile device CPU (e.g., the processor of a cell phone, tablet computer, smartphone, etc.) with the main processing of the head mounted devices control system being performed on the processor of mobile device. In another embodiment, the head mounted device may comprise a processor, a memory, a display and a camera. In an embodiment, a head mounted device may be a mobile device (e.g., smartphone, etc.) that includes one or more sensors (e.g., a depth sensor, camera, etc.) for scanning or collecting information from an environment (e.g., room, etc.) and circuitry for transmitting the collected information to another device (e.g., server, second mobile device, etc.). An HMD or BMD may thus capture gesture information from a user and use that information as part of a contactless control interface.

As used herein, "content" refers to a file or data which may be presented in a display, and manipulated with a panning gesture. Examples may be text files, pictures, or movies which may be stored in any format and presented to a user by a display. During presentation of content on a display, details of content may be associated with the particular display instance of the content, such as color, zoom, detail levels, and a current content position.

As used herein, "current content position" refers to a characteristic of content that may be presented on a display. In particular, when content is zoomed such that the entire content is not visible on the display surface, a current content position may be used to match a gesture to a panning transformation presented at a content surface, and shift a portion of the content that is presented at the display surface as the current content position is updated.

In another embodiment, the head mounted device may include a wireless interface for connecting with the Internet, a local wireless network, or another computing device. In another embodiment, a pico-projector may be associated in the head mounted device to enable projection of images onto surfaces. The head mounted device may be lightweight and constructed to avoid use of heavy components, which could cause the device to be uncomfortable to wear. The head mounted device may also be operable to receive audio/gestural inputs from a user. Such gestural or audio inputs may be spoken voice commands or a recognized user gesture, which when recognized by a computing device may cause that device to execute a corresponding command.

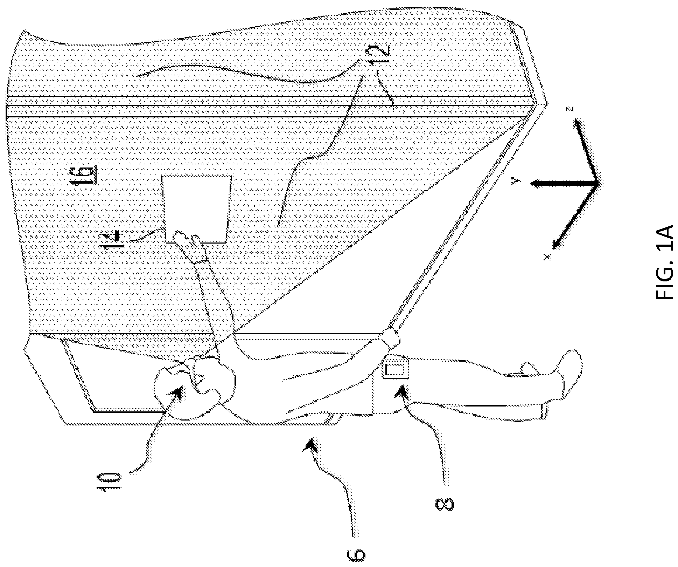

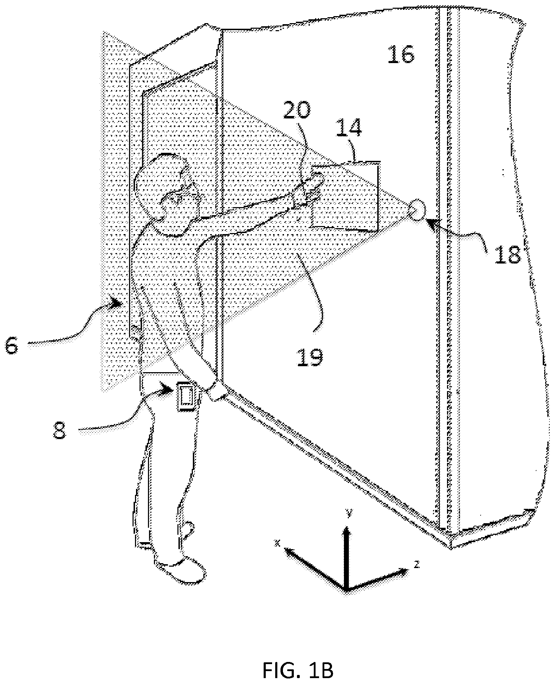

FIGs. 1A and 1B illustrate two potential environments in which embodiments of a contactless panning gesture may be implemented. Both FIGs. 1A and 1B include a display 14 mounted on surface 16. Additionally, in both FIGs. a hand of the user functions as control object 20. In FIG. 1A, HMD 10 is worn by a user 6. Mobile computing device 8 is attached to user 6. In FIG. 1A, HMD 10 is illustrated as having an integrated camera shown by shading associated with camera field of vision 12. The field of vision 12 for a camera embedded in HMD 10 is shown by the shading, and will move to match head movements of user 6. Camera field of vision 12 is sufficiently wide to include the control object 20 when it is placed in a control plane parallel to surface 16 and display 14.

Reference axes are shown with an x direction along the base of surface 16, a y direction that is up and down along the height of surface 16, and a z direction that is normal to the plane of surface 16. A control plane may be any roughly x-y plane between the user and display 14. In alternative embodiments, the control plane may be offset from the plane of the display, especially if the user's body is offset from a position looking at the display. In further embodiments, the control plane may be at the surface of display 14 such that the control objects touch display 14, or the control plane may be in free space, offset from the surface of display 14 in the z direction. In some embodiments, the control plane is determined by a gaze of the user or a direction in which the user's head or body is facing. In some embodiments, a user motion will be interpreted to be in such control plane regardless of where the motion is performed. For example, a circular motion performed by a user extending his hand to his side may be interpreted to be in a control plane approximately parallel to the surface 16 if the user is facing or gazing at the surface 16 in some embodiments.

In the system of FIG. 1A, the image from HMD 10 may be communicated wirelessly from a communication module within HMD 10 to a computer associated with display 14, or may be communicated from HMD 10 to mobile computing device 8 either wirelessly or using a wired connection. In an embodiment where images are communicated from HMD 10 to mobile computing device 8, mobile computing device 8 may communicate the images to an additional computing device that is coupled to the display 14. Alternatively, mobile computing device 8 may process the images to identify a gesture, and then adjust content being presented on display 14, especially if the content on display 14 is originating from mobile computing device 8. In a further embodiment, mobile computing device 8 may have a module or application that performs an intermediate processing or communication step to interface with an additional computer, and may communicate data to the computer which then adjusts the content on display 14. In certain embodiments, display 14 need not be a hardware display, but might be a virtual display created, for example, by HMD 10.

FIG. 1B illustrates an alternative embodiment, wherein the image detection is performed by camera 18, which is mounted in surface 16 along with display 14. In such an embodiment, camera 18 will be communicatively coupled to a processor that may be part of camera 18, part of display 14, or part of a computer system communicatively coupled to both camera 18 and display 14. Camera 18 has a field of view 19 shown by the shaded area, which will cover control objects as they move through an x-y control plane. In certain embodiments, a camera may be mounted to an adjustable control that moves field of view 19 in response to detection of a height of user 6. In further embodiments, multiple cameras may be integrated into surface 16 to provide a field of vision over a greater area, and from additional angles in case user 6 is obscured by an obstruction blocking a field of view of camera 18. Multiple cameras may additionally be used to provide improved gesture data for improved accuracy in gesture recognition. In further embodiments, additional cameras may be located in any location relative to the user to provide gesture images.

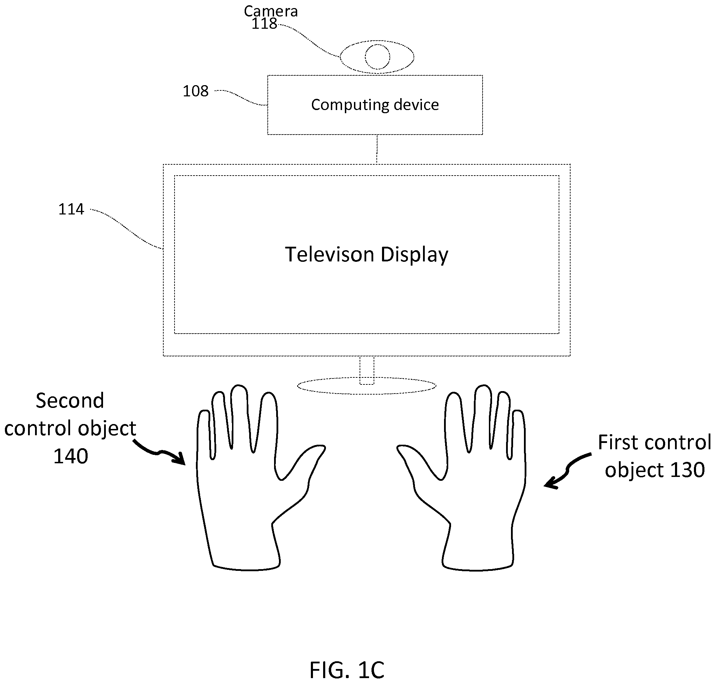

FIG. 1C illustrates another alternative embodiment, where image detection is performed by camera 118. In such an embodiment, both hands of a user may be detected as first control object 130 and second control object 140. Processing of the image to detect control objects 130 and 140 as well as resulting control of the content may be performed by computing device 108 for content displayed on television display 114.

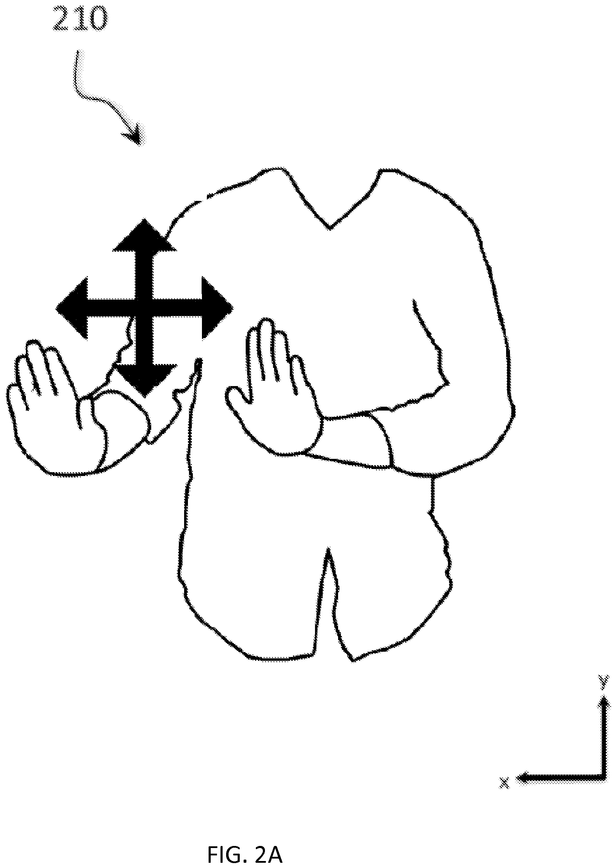

FIG. 2A shows a reference illustration of a coordinate system that may be applied to an environment in an embodiment. In the embodiments of FIGs. 1A and 1B, the x-y arrows of FIG. 2A may correspond with the x-y plane of FIGs. 1A and 1B. User 210 is shown positioned in a positive z-axis location facing the x-y plane, and user 210 may thus make a gesture that may be captured by a camera, with the user facing the display, with the coordinates of the motion captured by the camera processed by a computer using the corresponding x, y, and z coordinates as observed by the camera. For a panning gesture illustrated by FIG. 2A, movement across x and y coordinates by control objects in a control plane may be the same or different from x and y coordinates used to display and manipulate content on a display surface. As described above, the user may then move the control objects, which are hands in FIG. 2A. A remote detection system may then detect the motion of the control objects, and translate this motion to pan content displayed in a display surface. The gesture illustrated by FIG. 2A is likened to the motion used when moving a large cloth across a table. Two hands are used in a linear, open palm motion across the detection area as illustrated. The gesture is made in a control plane, and is matched to the content being manipulated as shown on a content surface. If the content is on a vertical screen, the motion will be roughly over a content plane parallel to the vertical screen of the content surface. If the content is on a horizontal screen, the motion will be approximately parallel to the horizontal screen. The content plane may be the surface of the content surface that may be touched by the user, or may be a free-air plane above or away from the content surface. The user may be able to transition between horizontal and vertical surface planes as part of the gesture motion.

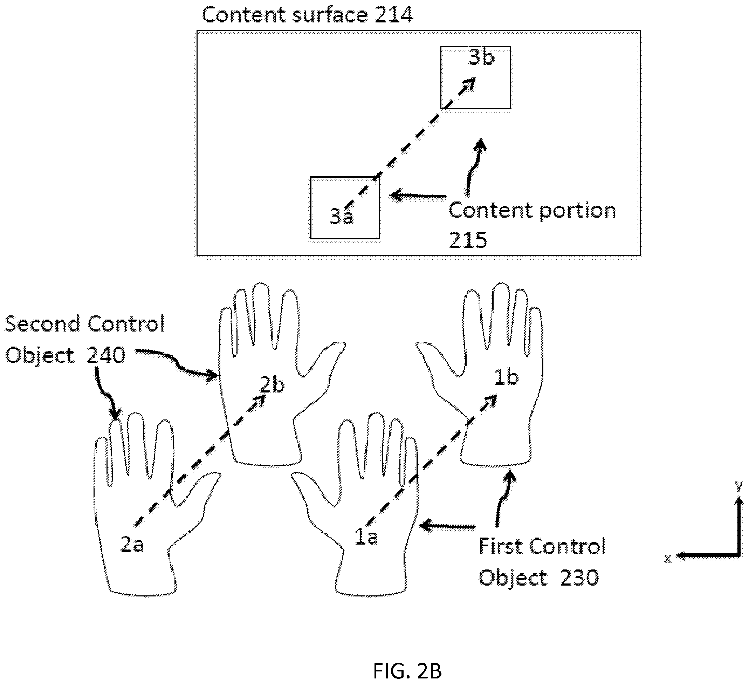

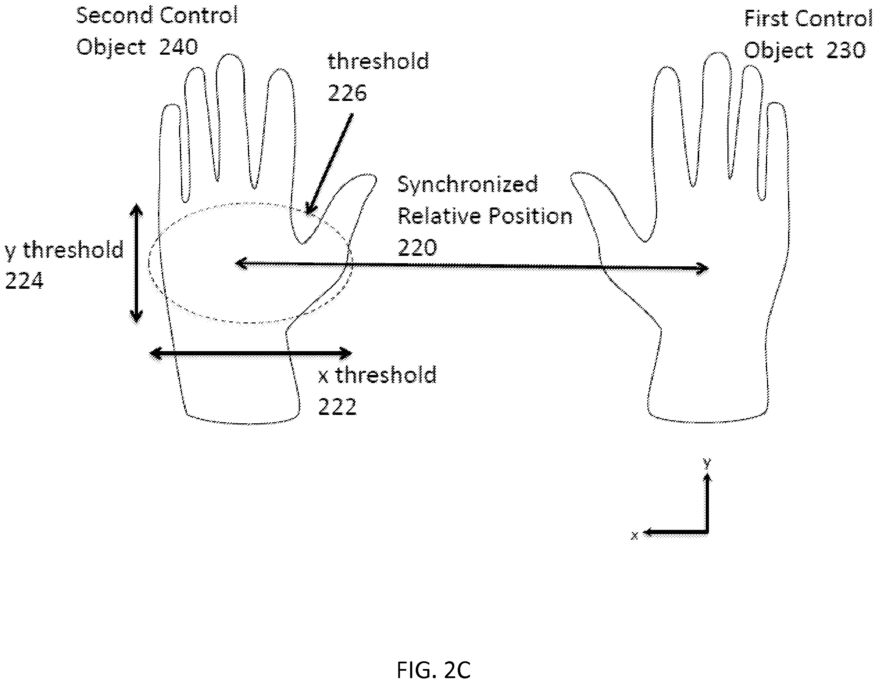

A stream of frames containing x, y, and z coordinates of the user hands and optionally other joint locations may then be received to identify the gesture. Such information may be recorded within a coordinate system or framework identified by the gesture recognition system as shown in FIG. 2. To engage the panning operation, the user may hold both hands still and level in some embodiments. Once the system is engaged, panning may begin. The system may be designed with certain thresholds, such that a user's hands may be considered still if they remain within a roughly defined volume for a predetermined amount of time. The level position of both hands may be analyzed to determine that they are within, for example, 100mm of one another with respect to the y axis position as shown in FIG. 2A. While panning the application may track the average motion of the 2 hands onto the object being panned. When the user has moved the object to the desired location they may disengage the panning operation using a panning disengagement motion. In certain embodiments, a panning engagement may involve detection that both control objects are roughly in same plane or that they are roughly in a plane parallel to the content. In further embodiments, when the control objects are hands, engagement may involve detecting that both hands are in the same pose (e.g., open hand with palms out or closed fist), or that one or both are in a specific pose (e.g., engagement may begin when a hand is open with palm out). In alternate embodiments, panning may be performed while the hands maintain the pose and move in a coordinate system (e.g,. closed fists could be used to pan in some embodiments, for example when a user closes his hands to engage or select, then pans with the fists closed).

FIG. 2B illustrates an embodiment of a panning gesture. First control object 230 and second control object 240 are shown as a user's hands. Further, a content surface 214 is shown including a content portion 215 that is displayed on content surface 214. During a panning gesture movement mode, the control objects are brought into an x-y control plane, and held at a roughly constant relative distance apart. Locations 1A, 1B, 2A, 2B are intended to be in the same first x-y plane, and locations 3a, and 3b are intended to be in a second x-y plane which may or may not be offset in the z direction from the first x-y plane.

During a panning gesture, first control object 230 moves from position 1A to position 1B, and second control object substantially simultaneously moves in an approximately synchronized motion from location 2A to location 2B. As shown, the synchronized relative position between the first control object 230 and the second control object 240 is maintained during the gesture. As part of operating in a panning gesture movement mode, a remote detection device captures the synchronized movements of the control objects. The captured information is then processed to identify a corresponding panning transformation to be presented at the display. As shown by FIG. 2B, in response to detection and processing of the gesture, a content portion 215 moves from an initial position 3a to a panned position 3b, where the movement from position 3a to 3b corresponds with the synchronized movement from locations 1A and 2A to locations 1B and 2B of control objects 230 and 240.

While the figures presented show a display surface in a wall mounted type configuration, or where the display is along a vertical position, embodiments may also include table-top type display. In such embodiments, the user may remain upright in a standing or sitting position, but the control plane and content surface are now in an x-z plane according to the reference directions used in FIGs. 1 and 2. In such an embodiment, the gesture may be considered similar to touching a table cloth with both hands, and sliding the table cloth across the table, where the hands are the control object and the tablecloth is the content. As the control objects move in a synchronized motion, the content slides or pans across the display in response to the synchronized movement of the control objects.

In certain embodiments, a tolerance threshold may be identified for the level of synchronization of the control objects. One embodiment illustrates this with threshold 226 in FIG. 2C. FIG. 2C includes first control object 230 and second control object 240. During a panning gesture movement mode, an initial synchronized relative position may be established as synchronized relative position 220 when a user first places the first control object and the second control object 240 into a control plane. The location of the control plane may be established at this same time, or may have been previously determined and identified to the user. Threshold 226 shows an allowable variation in the synchronized relative position 220 during a panning gesture. If synchronized relative position 220 varies beyond threshold 226, the panning gesture movement mode may be terminated, and the content presented at the content surface may stop panning to match movements of the first and second control objects. In addition to a y threshold 224 and an x threshold 222, threshold 226 may further include a z threshold component, to accommodate differences in movement in the z direction which may be slightly out of the control plane, but within an acceptable tolerance for the control plane.

In certain embodiments, the threshold 226 may be variable, based on a number of different factors. For example, the threshold may be made proportional to the velocity or speed of the control objects. In particular, as a user controls first and second control objects 230 and 240, the user's ability to maintain a synchronized relative position 220 may deteriorate. A system may thus measure the velocity of control objects and set a threshold 226 that increases with increasing measured velocity. In one embodiment of such a system, then:

$$(1) \quad \text{threshold} = ((\text{MAX\_TOLERANCE} - \text{MIN\_TOLERANCE}) * \text{calibration factor}) + \text{MIN\_TOLERANCE}$$

The MAX_TOLERANCE and MIN_TOLERANCE may comprise the system setting for maximum and minimum allowable deviation in the x, y, and/or z directions, and the calibration factor may be a system setting based on the measured velocity. In certain embodiments, calibration factor may be proportional to the measured velocity, while in other embodiments, an identified non-linear association between various speeds and allowable thresholds may be set using a table or equation for the calibration factor value at each velocity. Thus, in some embodiments, the threshold may increase as the speed of the control objects increases such that a greater separation between the two objects is allowed when the control objects are moving at a greater rate.

In certain embodiments, a calibration factor may be a value that accounts for a total distance travelled by the control objects from a starting point. Thus the threshold may increase as, for example, hands acting as control objects move away from a neutral position. In still further embodiments, variations in the allowable threshold may be based on additional factors. For example during extended panning sessions, a user may grow tired, and the threshold may be increased over time to compensate for reduced user control as the user grows tired.

In still further embodiments, a skeletal model and an associated analysis may be done to vary the threshold as a user extends in the panning gesture to extreme movement positions in the control plane, such that at certain extreme positions, the threshold may be increased.

Additionally, certain users may have hand shake associated with the user's best control to hold a control object in a steady position. In certain embodiments, a system may detect a repetitive hand shake movement, and may compensate any threshold and velocity measurements to accommodate such hand shake. Similarly, certain small jerking motions may cause individual velocity measurements used by the system to be unexpectedly high, and a system may compensate for such jerking motions by averaging control object movements or ignoring measurement outliers.

Still further embodiments may include additional aspects for compensating for variations in user control of control objects. For example, if a central or average position of synchronized relative position 220 shifts over time, an initial synchronized relative position 220 may be reset to match changes in user position over time. A system may additionally identify shifts in a user stance or position that impact the synchronized relative position 220, and reset the synchronized relative position 220 in response to a user stance shift. Such a response may or may not be accompanied by an associated change in settings for threshold 226.

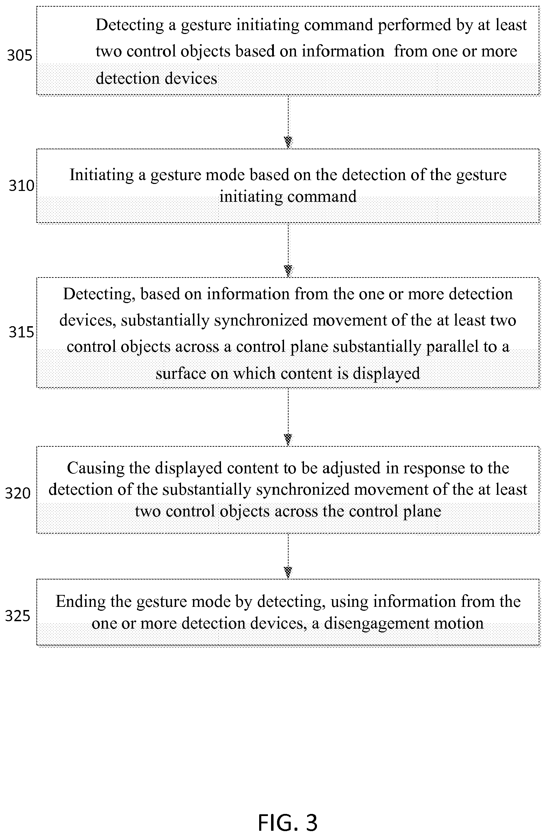

FIG. 3, then, describes one embodiment of a method for implementing a contactless panning gesture. As part of the method of FIG. 3, content such as a movie, a picture, or a text object is shown in a display such as display 14 of FIG. 1. A computing device controls which portions of the content are presented in which locations in a content surface. A remote detection device is coupled to the computer to observe gestures made by a user.

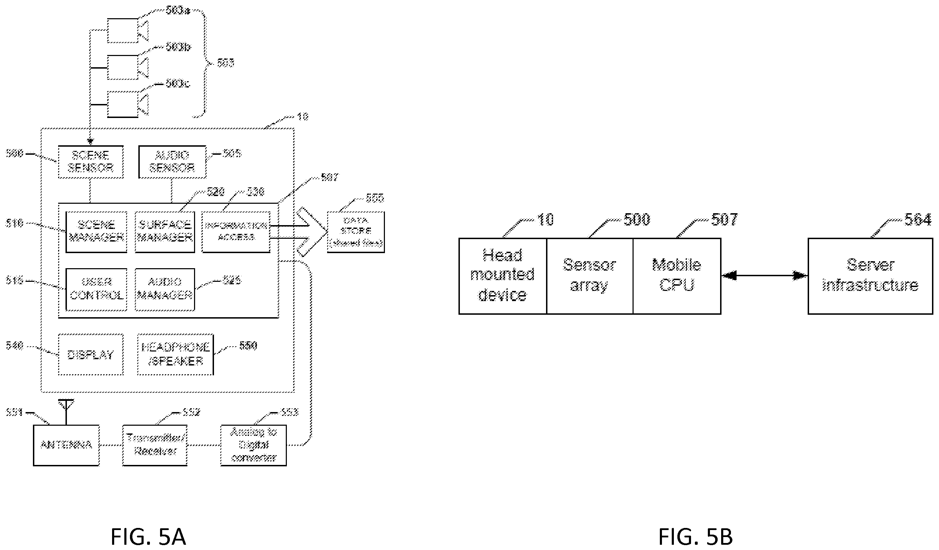

In 305, a remote detection device detects two control objects. Detection of control objects such as a hand or hands of the user may be done by any means such as the use of an optical camera, stereo camera, depth camera, inertial sensors such as a wrist band or ring, or any other such remote detection device. Any of HMD 10 of FIG. 1A, camera 18 of FIG. 1B, or any remote sensing device described herein may be used to identify the control objects. In particular, the use of head mounted displays are one option for convenient integration of free-air gesture control as described further in FIG. 5, but other examples may use such a gestural interaction system, such as media center TVs, shop window kiosks, and interfaces relating to real world displays and content surfaces.

In 310, then, a gesture mode, for example a panning mode, may be initiated based on the detected gesture from 305. Processing to initiate this panning mode may be done by any computing device described herein such as mobile device 8, computing device 108, a processor within HMD 10, or any computing system 600 integrated into an embodiment. Various embodiments may accept a wide variety of inputs that initiate a panning mode, including differing modes where differing commands are accepted. To prevent accidental gesture input as a user enters, walks across a field of view of the control camera, or performs other actions within the field of view of the control camera, the computer may not accept certain gestures until a mode initiating signal is received. A panning gesture initiating command may be a gesture recognized by the control camera. In one potential embodiment, this may be detection of a gesture such as detecting that a user has moved two control objects into a position between the user and a content surface, and has maintained a fixed position for a predetermined amount of time.

In alternative embodiments, a sound or voice command may be used to initiate the panning mode. In such an embodiment, the system may initiate additional processing procedures to identify control objects within a control plane, and to identify a synchronized relative position between control objects once they are identified in the control plane. Alternatively a button or an off-hand remote control may be used to initiate a panning mode. Depending on various circumstances, the synchronized relative position of the control objects may thus be either the position of the control objects when the command is received, or a settled control object position in the control plane that is stationary for a predetermined amount of time following the input.

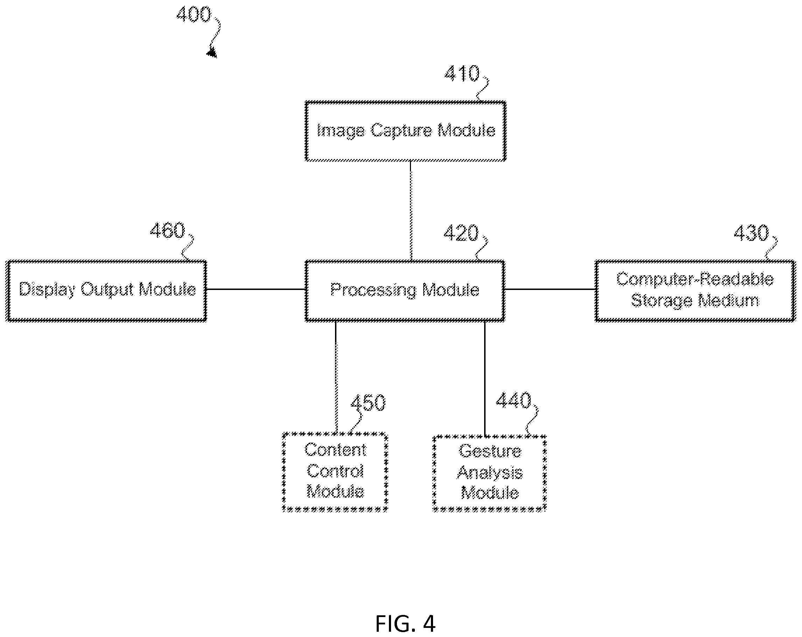

Additionally, in certain embodiments, a match may then be made between an absolute control object starting position and a current content position as the content is displayed when the panning mode begins. Then, in 315, synchronized movement of the control objects across a control plane approximately parallel to a content surface is detected, for example using a gesture analysis module 440 and/or processing module 420 illustrated and described with respect to FIG. 4.. In 320 synchronized motion of the control objects and the displayed content will then match or correlate the panning gesture to panning of the content on the content surface of a display such as a display of HMD 10 or television 114. 315 and 320 then may occur continuously or periodically to set the content display until the panning mode is terminated in 325. This is the synchronized motion detailed in FIG. 2B, where motion of the control objects is associated so that the remote detection system detects the motion of the control object and translates the detected motion into a shift transformation for displayed content. In various embodiments, different computing devices may match the gesture information received from a remote detection device to changes in content output to a display in a variety of different ways. In one embodiment, for example a stream of frames containing x, y, and z coordinates of the control objects and optionally user joint locations may then be received by a remote detection device and analyzed in a computing device to identify the gesture. Such information may be recorded within a framework or coordinate system identified by the gesture recognition system as shown in FIG. 2B. The motions in the coordinate system may then be matched to a coordinate system for the content, with shifts in the displayed content matching the coordinate movements identified by the analysis of the stream of frames. Additional embodiments and methods may also be used, some of which are further detailed below.

As mentioned above, in 325, a panning disengagement motion is detected, and the gesture movement mode is ended. While threshold 226 is described above in the context of measuring allowable variations in movement between control objects, other techniques may be used to terminate a panning mode, for example such that when a user's hands return to a resting position, shift to a new gesture position, or simply relax, remote detection of a relative shift in control object position may be used to end a panning mode. Thus, multiple alternative movements may be detected and identified as a trigger for ending a panning mode.

As a further alternative, removal of one or both control objects beyond a threshold in the z direction, as described above, may also function as a panning disengagement motion, even if the control objects are synchronized during this motion. Embodiments with such a panning disengagement motion may further function to enable repeated panning across content that is greater than the range of motion of a user. For example, in a content with large zoom where the content is many times larger than the portion of the content displayed on a display surface, a user may initiate a panning motion with the control objects at one extreme. This may be, for example, a user moving hands from an extreme left to an extreme right in a panning mode. At the extreme right, the user may remove the control objects from the control plane, and place the control objects back in the control plane at the extreme left. In this way, the user may repeatedly pan in the same direction across content by repeatedly initiating and disengaging a panning mode, and by panning the content while the panning mode is engaged. In certain embodiments, the z motion may have to be greater than some absolute threshold, or the z motion may have to be accompanied by a certain velocity in the z direction. For example, if a user is slowly moving both hands backward, that movement may not be identified as a disengagement command, but a quick backward motion or jerk backward may disengage the panning mode. In such embodiments, the remote detection device may be used to determine if an acceptable absolute z motion or velocity in the z direction is achieved.

In further alternative embodiments, an input for disengaging a panning mode may not be a motion or gesture. As with the input that initiates the panning mode, in certain embodiments the panning disengagement may be selected by a voice command or by a button or other remote control input on an electronic device.

In certain embodiments, the separation between the two control objects may be used to determine whether a certain motion is a valid input or "gesture," For example, if a user is making a circle with each hand, the system may use the separation between the hands to determine whether the circle comprises a valid input or "gesture." As the speed or size of a user's motion increases, the separation allowed between the hands to be considered an input or "gesture" or maybe a "bimanual gesture" may increase. This may enable a system to distinguish between gestures that are not intended as inputs to a content control system and gestures which are intended as inputs to a content control system. A system may use synchronized movement of control objects at certain distance ranges to be most likely to be command gestures, while smaller less synchronized movements may be identified as less likely to be command gestures. Such distinctions may further be calibrated to the size and reach of each individual user. These distinctions based on the separation between control objects may be used with any number of alternative command gestures for a content control system, and not merely for panning gestures and described herein.

FIG. 4 illustrates an embodiment of a system 400 for determining a gesture performed by a person. In various alternative embodiments, system 400 may be implemented among distributed components, or may be implemented in a single device or apparatus such as a cellular telephone with an integrated computer processor with sufficient processing power to implement the modules detailed in FIG. 4. Thus, in certain embodiments, the entire system 400 may be implemented on a single computing device 600 while in alternative embodiments, each element may be combinations of or separate elements of a computing device 600 as shown in FIG. 6. More generally, system 400 may be used for tracking a specific portion of a person or a control object. For instance, system 400 may be used for tracking a person's hands. System 400 may be configured to track one or both hands of a person simultaneously. System 400 may be configured to track an electronic control object and a user's hand simultaneously. Further, system 400 may be configured to track hands of multiple persons simultaneously. While system 400 is described herein as being used to track the location of a persons' hands, it should be understood that system 400 may be configured to track other parts of persons, such as heads, shoulders, torsos, legs, etc. The hand tracking of system 400 may be useful for detecting gestures performed by the one or more persons. System 400 itself may not determine a gesture performed by the person or may not perform the actual hand identification or tracking in some embodiments; rather, system 400 may output a position of one or more hands, or may simply output a subset of pixels likely to contain foreground objects. The position of one or more hands may be provided to and/or determined by another piece of hardware or software for gestures, which might be performed by one or more persons. In alternative embodiments, system 400 may be configured to track a control device held in a user's hands or attached to part of a user's body.

System 400 may include image capture module 410, processing module 420, computer-readable storage medium 430, gesture analysis module 440, content control module 450, and display output module 460. Additional components may also be present. For instance, system 400 may be incorporated as part of a computer system, or, more generally, a computerized device. Computer system 600 of FIG. 6 illustrates one potential computer system which may be incorporated with system 400 of FIG. 4. Image capture module 410 may be configured to capture multiple images. Image capture module 410 may be a camera, or, more specifically, a video camera such as camera 18 or camera 118. In other embodiments, image capture module 410 may be replaced by any detection device described herein including inertial sensors or other sensors that track movement without capturing an image. Image capture module 410 may capture a series of images in the form of video frames. These images may be captured periodically, such as 30 times per second. The images captured by image capture module 410 may include intensity and depth values for each pixel of the images generated by image capture module 410.

Image capture module 410 may project radiation, such as infrared radiation (IR) out into its field-of-view (e.g., onto the scene). The intensity of the returned infrared radiation may be used for determining an intensity value for each pixel of image capture module 410 represented in each captured image. The projected radiation may also be used to determine depth information. As such, image capture module 410 may be configured to capture a three-dimensional image of a scene. Each pixel of the images created by image capture module 410 may have a depth value and an intensity value. In some embodiments, an image capture module may not project radiation, but may instead rely on light (or, more generally, radiation) present in the scene to capture an image. For depth information, the image capture module 410 may be stereoscopic (that is, image capture module 410 may capture two images and combine them into a single image having depth information) or may use other techniques for determining depth.

The images captured by image capture module 410 may be provided to processing module 420. Processing module 420 may be configured to acquire images from image capture module 410. Processing module 420 may analyze some or all of the images acquired from image capture module 410 to determine the location of one or more hands belonging to one or more persons present in one or more of the images. Processing module 420 may include software, firmware, and/or hardware. Processing module 420 may be in communication with computer-readable storage medium 430. Processing module 420 may be one or more processors 610 in one or more computing devices 600 and computer-readable storage medium may be one or more storage devices 625 or working memory 635 of such computing devices 600. Computer-readable storage medium 430 may be used to store information related to background models and/or foreground models created for individual pixels of the images captured by image capture module 410. If the scene captured in images by image capture module 410 is static, it can be expected that a pixel at the same location in the first image and the second image corresponds to the same object. As an example, if a couch is present at a particular pixel in a first image, in the second image, the same particular pixel of the second image may be expected to also correspond to the couch. Background models and/or foreground models may be created for some or all of the pixels of the acquired images. Computer-readable storage medium 430 may also be configured to store additional information used by processing module 420 to determine a position of a hand (or some other part of a person's body). For instance, computer-readable storage medium 430 may contain information on thresholds (which may be used in determining the probability that a pixel is part of a foreground or background model) and/or may contain information used in conducting a principal component analysis.

Processing module 420 may provide an output to another module, such as gesture analysis module 440. Gesture analysis module 440 may be any combination of hardware, software, or firmware executed by one or more processors 610. In various embodiments, gesture analysis module 440 may be software executed by processing module 420 while in other embodiments gesture analysis module 440 may comprise separate dedicated hardware including a processor 610. Processing module 420 may output two-dimensional coordinates and/or three-dimensional coordinates to another software module, hardware module, or firmware module, such as gesture analysis module 440. The coordinates output by processing module 420 may indicate the location of a detected hand (or some other part of the person's body). If more than one hand is detected (of the same person or of different persons), more than one set of coordinates may be output. Two-dimensional coordinates may be image-based coordinates, wherein an x-coordinate and y-coordinate correspond to pixels present in the image. Three-dimensional coordinates may incorporate depth information. Coordinates may be output by processing module 420 for each image in which at least one hand is located. Further, the processing module 420 may output one or more subsets of pixels having likely background elements extracted and/or likely to include foreground elements for further processing.

Gesture analysis module 440 may be any one of various types of gesture determination systems. Gesture analysis module 440 may be configured to use the two- or three-dimensional coordinates output by processing module 420 to determine a gesture being performed by a person. As such, processing module 420 may output only coordinates of one or more hands, determining an actual gesture and/or what function should be performed in response to the gesture may be performed by gesture analysis module 440. It should be understood that gesture analysis module 440 is illustrated in FIG. 4 for example purposes only. Other possibilities, besides gestures, exist for reasons as to why one or more hands of one or more users may be desired to be tracked. As such, some other module besides gesture analysis module 440 may receive locations of parts of persons' bodies.

Content control module 450 may similarly be implemented as a software module, hardware module, or firmware module. Such a module may be integrated with processing module 420 or structured as a separate remote module in a separate computing device. Content control module 450 may comprise a variety of controls for manipulating content to be output to a display. Such controls may include play, pause, seek, rewind, pan, and zoom, or any other similar such controls. When gesture analysis module 440 identifies an input initiating a panning mode, and further identifies synchronized movement along a control plane as part of a panning mode, the movement may be communicated to content control module to update a current content position for a content being displayed at a present time.

Display output module 460 may further be implemented as a software module, hardware module, or firmware module. Such a module may include instructions matched to a specific output display that presents content to the user, and may be considered an output device 620 of a computing device 600. As the content control module 450 receives gesture commands identified by gesture analysis module 440, the display signal being output to the display by display output module 460 may be modified in real-time or near real-time to adjust the content.

FIGs. 5A and 5B describe one potential embodiment of a head mounted device. In certain embodiments, a head mounted device as described in these FIGs. may further be integrated with a system for providing virtual displays through the head mounted device, where a display is presented in a pair of glasses or other output display that provides the illusion that the display is originating from a passive display surface.

FIG. 5A illustrates components that may be included in embodiments of head mounted devices 10. FIG. 5B illustrates how head mounted devices 10 may operate as part of a system in which a sensor array 500 may provide data to a mobile processor 507 that performs operations of the various embodiments described herein, and communicates data to and receives data from a server 564. Such a server may comprise one or more computing devices 600, or any combination of such devices networked together. It should be noted that the processor 507 head mounted device 10 may include more than one processor (or a multi-core processor) in which a core processor may perform overall control functions while a coprocessor executes applications, sometimes referred to as an application processor. The core processor and applications processor may be configured in the same microchip package, such as a multi-core processor, or in separate chips. Also, the processor 507 may be packaged within the same microchip package with processors associated with other functions, such as wireless communications (i.e., a modem processor), navigation (e.g., a processor within a GPS receiver), and graphics processing (e.g., a graphics processing unit or "GPU"). In alternative embodiments, processor 507 may comprise one or more processors 610 which may be part of a computing device 600.

The head mounted device 10 may communicate with a communication system or network that may include other computing devices, such as personal computers and mobile devices with access to the Internet. Such personal computers and mobile devices may include an antenna 551, a transmitter/receiver or transceiver 552 and an analog to digital converter 553 coupled to a processor 507 to enable the processor to send and receive data via a wireless communication network. For example, mobile devices, such as cellular telephones, may access the Internet via a wireless communication network (e.g., a Wi-Fi or cellular telephone data communication network). Such wireless communication networks may include a plurality of base stations coupled to a gateway or Internet access server coupled to the Internet. Personal computers may be coupled to the Internet in any conventional manner, such as by wired connections via an Internet gateway (not shown) or by a wireless communication network.

Referring to FIG. 5A, the head mounted device 10 may include a scene sensor 500 and an audio sensor 505 coupled to a control system processor 507 which may be configured with a number of software modules 510-525 and connected to a display 540 and audio output 550. In various embodiments, the sensors and modules may be structured as separate computing devices 600 with dedicated processors 610 and working memory 635, while in other embodiments they may share such computing device elements. In an embodiment, the processor 507 or scene sensor 500 may apply an anatomical feature recognition algorithm to the images to detect one or more anatomical features. The processor 507 associated with the control system may review the detected anatomical features in order to recognize one or more gestures and process the recognized gestures as an input command. For example, as discussed in more detail below, a user may execute a movement gesture corresponding to a panning command using a synchronized motion of two control objects across a control plane. In response to recognizing this example gesture, the processor 507 may initiate a panning mode and then adjust content presented in the display as the control objects move to change the current position of the presented content.

The scene sensor 500, which may include stereo cameras, orientation sensors (e.g., accelerometers and an electronic compass) and distance sensors, may provide scene-related data (e.g., images) to a scene manager 510 implemented within the processor 507 which may be configured to interpret three-dimensional scene information. In various embodiments, the scene sensor 500 may include stereo cameras (as described below) and distance sensors, which may include infrared light emitters for illuminating the scene for an infrared camera. For example, in an embodiment illustrated in FIG. 5A, the scene sensor 500 may include a stereo red green- blue (RGB) camera 503a for gathering stereo images, and an infrared camera 503b configured to image the scene in infrared light which may be provided by a structured infrared light emitter 503c. The structured infrared light emitter may be configured to emit pulses of infrared light that may be imaged by the infrared camera 503b, with the time of received pixels being recorded and used to determine distances to image elements using time-of-flight calculations. Collectively, the stereo RGB camera 503a, the infrared camera 503b and the infrared emitter 503c may be referred to as an RGB-D (D for distance) camera 503.

The scene manager module 510 may scan the distance measurements and images provided by the scene sensor 500 in order to produce a three-dimensional reconstruction of the objects within the image, including distance from the stereo cameras and surface orientation information. In an embodiment, the scene sensor 500, and more particularly an RGB-D camera 503, may point in a direction aligned with the field of view of the user and the head mounted device 10. The scene sensor 500 may provide a full body three-dimensional motion capture and gesture recognition. The scene sensor 500 may have an infrared light emitter 503c combined with an infrared camera 503c, such as a monochrome CMOS sensor. The scene sensor 500 may further include stereo cameras 503a that capture three-dimensional video data. The scene sensor 500 may work in ambient light, sunlight or total darkness and may include an RGB-D camera as described herein. The scene sensor 500 may include a near-infrared (NIR) pulse illumination component, as well as an image sensor with a fast gating mechanism. Pulse signals may be collected for each pixel and correspond to locations from which the pulse was reflected and can be used to calculate the distance to a corresponding point on the captured subject

In another embodiment, the scene sensor 500 may use other distance measuring technologies (i.e., different types of distance sensors) to capture the distance of the objects within the image, for example, ultrasound echo-location, radar, triangulation of stereoscopic images, etc. The scene sensor 500 may include a ranging camera, a flash LIDAR camera, a time-of-flight (ToF) camera, and/or a RGB-D camera 503, which may determine distances to objects using at least one of range-gated ToF sensing, RF-modulated ToF sensing, pulsed-light ToF sensing, and projected-light stereo sensing. In another embodiment, the scene sensor 500 may use a stereo camera 503a to capture stereo images of a scene, and determine distance based on a brightness of the captured pixels contained within the image. As mentioned above, for consistency any one or all of these types of distance measuring sensors and techniques are referred to herein generally as "distance sensors." Multiple scene sensors of differing capabilities and resolution may be present to aid in the mapping of the physical environment, and accurate tracking of the user's position within the environment.

The head mounted device 10 may also include an audio sensor 505 such as a microphone or microphone array. An audio sensor 505 enables the head mounted device 10 to record audio, and conduct acoustic source localization and ambient noise suppression. The audio sensor 505 may capture audio and convert the audio signals to audio digital data. A processor associated with the control system may review the audio digital data and apply a speech recognition algorithm to convert the data to searchable text data. The processor may also review the generated text data for certain recognized commands or keywords and use recognized commands or keywords as input commands to execute one or more tasks. For example, a user may speak a command such as "initiate panning mode" have the system search for control objects along an expected control plane. As another example, the user may speak "close content" to close a file displaying content on the display.

The head mounted device 10 may also include a display 540. The display 540 may display images obtained by the camera within the scene sensor 500 or generated by a processor within or coupled to the head mounted device 10. In an embodiment, the display 540 may be a micro display. The display 540 may be a fully occluded display. In another embodiment, the display 540 may be a semitransparent display that can display images on a screen that the user can see through to view the surrounding room. The display 540 may be configured in a monocular or stereo (i.e., binocular) configuration. Alternatively, the head-mounted device 10 may be a helmet mounted display device, worn on the head, or as part of a helmet, which may have a small display 540 optic in front of one eye (monocular) or in front of both eyes (i.e., a binocular or stereo display). Alternatively, the head mounted device 10 may also include two display units 540 that are miniaturized and may be any one or more of cathode ray tube (CRT) displays, liquid crystal displays (LCDs), liquid crystal on silicon (LCos) displays, organic light emitting diode (OLED) displays, Mirasol displays based oii Interferometric Modulator (IMOD) elements which are simple micro-electromechanical system (MEMS) devices, light guide displays and wave guide displays, and other display technologies that exist and that may be developed. In another embodiment, the display 540 may comprise multiple micro-displays 540 to increase total overall resolution and increase a field of view.

The head mounted device 10 may also include an audio output device 550, which may be a headphone and/or speaker collectively shown as reference numeral 550 to output audio. The head mounted device 10 may also include one or more processors that can provide control functions to the head mounted device 10 as well as generate images, such as of virtual objects. For example, the device 10 may include a core processor, an applications processor, a graphics processor and a navigation processor. Alternatively, the head mounted display 10 may be coupled to a separate processor, such as the processor in a smartphone or other mobile computing device. Video/audio output may be processed by the processor or by a mobile CPU, which is connected (via a wire or a wireless network) to the head mounted device 10. The head mounted device 10 may also include a scene manager block 510, a user control block 515, a surface manager block 520, an audio manager block 525 and an information access block 530, which may be separate circuit modules or implemented within the processor as software modules. The head mounted device 10 may further include a local memory and a wireless or wired interface for communicating with other devices or a local wireless or wired network in order to receive digital data from a remote memory 555. Using a remote memory 555 in the system may enable the head mounted device 10 to be made more lightweight by reducing memory chips and circuit boards in the device.

The scene manager block 510 of the controller may receive data from the scene sensor 500 and construct the virtual representation of the physical environment. For example, a laser may be used to emit laser light that is reflected from objects in a room and captured in a camera, with the round trip time of the light used to calculate distances to various objects and surfaces in the room. Such distance measurements may be used to determine the location, size and shape of objects in the room and to generate a map of the scene. Once a map is formulated, the scene manager block 510 may link the map to other generated maps to form a larger map of a predetermined area. In an embodiment, the scene and distance data may be transmitted to a server or other computing device which may generate an amalgamated or integrated map based on the image, distance and map data received from a number of head mounted devices (and over time as the user moved about within the scene). Such an integrated map data made available via wireless data links to the head mounted device processors.

The other maps may be maps scanned by the instant device or by other head mounted devices, or may be received from a cloud service. The scene manager 510 may identify surfaces and track the current position of the user based on data from the scene sensors 500. The user control block 515 may gather user control inputs to the system, for example audio commands, gestures, and input devices (e.g., keyboard, mouse). In an embodiment, the user control block 515 may include or be configured to access a gesture dictionary to interpret user body part movements identified by the scene manager 510, As discussed above a gesture dictionary may store movement data or patterns for recognizing gestures that may include pokes, pats, taps, pushes, guiding, flicks, taming, rotating, grabbing and pulling, two hands with palms open for panning images, drawing (e.g., finger painting), forming shapes with fingers, and swipes, all of which may be accomplished on or in close proximity to the apparent location of a virtual object in a generated display. The user control block 515 may also recognize compound commands. This may include two or more commands. For example, a gesture and a sound (e.g. clapping) or a voice control command (e.g. 'OK' detected hand gesture made and combined with a voice command or a spoken word to confirm an operation). When a user control 515 is identified the controller may provide a request to another subcomponent of the device 10.

The head mounted device 10 may also include a surface manager block 520. The surface manager block 520 may continuously track the positions of surfaces within the scene based on captured images (as managed by the scene manager block 510) and measurements from distance sensors. The surface manager block 520 may also continuously update positions of the virtual objects that are anchored on surfaces within the captured image. The surface manager block 520 may be responsible for active surfaces and windows. The audio manager block 525 may provide control instructions for audio input and audio output. The audio manager block 525 may construct an audio stream delivered to the headphones and speakers 550.

The information access block 530 may provide control instructions to mediate access to the digital information. Data may be stored on a local memory storage medium on the head mounted device 10. Data may also be stored on a remote data storage medium 555 on accessible digital devices, or data may be stored on a distributed cloud storage memory, which is accessible by the head mounted device 10. The information access block 530 communicates with a data store 555, which may be a memory, a disk, a remote memory, a cloud computing resource, or an integrated memory 555.

FIG. 6 illustrates an example of a computing system in which one or more embodiments may be implemented. A computer system as illustrated in FIG. 6 may be incorporated as part of the previously described computerized devices in FIGs. 4 and 5. Any component of a system according to various embodiments may include a computer system as described by FIG. 6, including various camera, display, HMD, and processing devices Fig. 6 provides a schematic illustration of one embodiment of a computer system 600 that can perform the methods provided by various other embodiments, as described herein, and/or can function as the host computer system, a remote kiosk/terminal, a point-of-sale device, a mobile device such as mobile device 8, a HMD such as HMD 10, a computing device 108, a camera 18 or 118, an electronic control device, and/or a computer system. Fig. 6 is meant only to provide a generalized illustration of various components, any or all of which may be utilized as appropriate. Fig. 6, therefore, broadly illustrates how individual system elements may be implemented in a relatively separated or relatively more integrated manner.

The computer system 600 is shown comprising hardware elements that can be electrically coupled via a bus 605 (or may otherwise be in communication, as appropriate). The hardware elements may include one or more processors 610, including without limitation one or more general-purpose processors and/or one or more special-purpose processors (such as digital signal processing chips, graphics acceleration processors, and/or the like); one or more input devices 615, which can include without limitation a mouse, a keyboard and/or the like: and one or more output devices 620, which can include without limitation a display device, a printer and/or the like. The bus 605 may couple two or more of the processors 610, or multiple cores of a single processor or a plurality of processors. Processors 610 may be equivalent to processing module 420 or processor 507 in various embodiments. In certain embodiments, a processor 610 may be included in mobile device 8, television display 114, camera 18, computing device 108, HMD 10, or in any device or element of a device described herein.

The computer system 600 may further include (and/or be in communication with) one or more non-transitory storage devices 625, which can comprise, without limitation, local and/or network accessible storage, and/or can include, without limitation, a disk drive, a drive array, an optical storage device, a solid-state storage device such as a random access memory ("RAM") and/or a read-only memory ("ROM"), which can be programmable, flash-updateable and/or the like. Such storage devices may be configured to implement any appropriate data stores, including without limitation, various file systems, database structures, and/or the like.

The computer system 600 might also include a communications subsystem 630, which can include without limitation a modem, a network card (wireless or wired), an infrared communication device, a wireless communication device and/or chipset (such as a Bluetooth™ device, an 802.11 device, a Wi-Fi device, a WiMax device, cellular communication facilities, etc.), and/or similar communication interfaces. The communications subsystem 630 may permit data to be exchanged with a network (such as the network described below, to name one example), other computer systems, and/or any other devices described herein. In many embodiments, the computer system 600 will further comprise a non-transitory working memory 635, which can include a RAM or ROM device, as described above.

The computer system 600 also can comprise software elements, shown as being currently located within the working memory 635, including an operating system 640, device drivers, executable libraries, and/or other code, such as one or more application programs 645, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a computer-readable storage medium, such as the storage device(s) 625 described above. In some cases, the storage medium might be incorporated within a computer system, such as computer system 600. In other embodiments, the storage medium might be separate from a computer system (e.g., a removable medium, such as a compact disc), and/or provided in an installation package, such that the storage medium can be used to program, configure and/or adapt a general purpose computer with the instructions/code stored thereon. These instructions might take the form of executable code, which is executable by the computer system 600 and/or might take the form of source and/or installable code, which, upon compilation and/or installation on the computer system 600 (e.g., using any of a variety of generally available compilers, installation programs, compression/decompression utilities, etc.) then takes the form of executable code.

Substantial variations may be made in accordance with specific requirements. For example, customized hardware might also be used, and/or particular elements might be implemented in hardware, software (including portable software, such as applets, etc.), or both. Moreover, hardware and/or software components that provide certain functionality can comprise a dedicated system (having specialized components) or may be part of a more generic system. For example, an activity selection subsystem configured to provide some or all of the features described herein relating to the selection of activities by a context assistance server 140 can comprise hardware and/or software that is specialized (e.g., an application-specific integrated circuit (ASIC), a software method, etc.) or generic (e.g., processors) 610, applications 645, etc.) Further, connection to other computing devices such as network input/output devices may be employed.

Some embodiments may employ a computer system (such as the computer system 600) to perform methods in accordance with the disclosure. For example, some or all of the procedures of the described methods may be performed by the computer system 600 in response to processor 610 executing one or more sequences of one or more instructions (which might be incorporated into the operating system 640 and/or other code, such as an application program 645) contained in the working memory 635. Such instructions may be read into the working memory 635 from another computer-readable medium, such as one or more of the storage device(s) 625. Merely by way of example, execution of the sequences of instructions contained in the working memory 635 might cause the processor(s) 610 to perform one or more procedures of the methods described herein.

The terms "machine-readable medium" and "computer-readable medium," as used herein, refer to any medium that participates in providing data that causes a machine to operate in a specific fashion. In an embodiment implemented using the computer system 600, various computer-readable media might be involved in providing instructions/code to processor(s) 610 for execution and/or might be used to store and/or carry such instructions/code (e.g., as signals). In many implementations, a computer-readable medium is a physical and/or tangible storage medium. Such a medium may take many forms, including but not limited to, non-volatile media, volatile media, and transmission media. Non-volatile media include, for example, optical and/or magnetic disks, such as the storage device(s) 625. Volatile media include, without limitation, dynamic memory, such as the working memory 635. Transmission media include, without limitation, coaxial cables, copper wire and fiber optics, including the wires that comprise the bus 605, as well as the various components of the communications subsystem 630 (and/or the media by which the communications subsystem 630 provides communication with other devices). Hence, transmission media can also take the form of waves (including without limitation radio, acoustic and/or light waves, such as those generated during radio-wave and infrared data communications). Such memory may be used in mobile device 8, television display 114, camera 18, computing device 108, HMD 10, or in any device or element of a device described herein. Similarly, modules such as gesture analysis module 440 or content control module 450, or any other such module described herein may be implemented by instructions stored in such memory.

Common forms of physical and/or tangible computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, EPROM, a FLASH-EPROM, any other memory chip or cartridge, a carrier wave as described hereinafter, or any other medium from which a computer can read instructions and/or code.

Various forms of computer-readable media may be involved in carrying one or more sequences of one or more instructions to the processor(s) 610 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 600. These signals, which might be in the form of electromagnetic signals, acoustic signals, optical signals and/or the like, are all examples of carrier waves on which instructions can be encoded, in accordance with various embodiments.

The communications subsystem 630 (and/or components thereof) generally will receive the signals, and the bus 605 then might carry the signals (and/or the data, instructions, etc. carried by the signals) to the working memory 635, from which the processor(s) 605 retrieves and executes the instructions. The instructions received by the working memory 635 may optionally be stored on a non-transitory storage device 625 either before or after execution by the processor(s) 610.

The methods, systems, and devices discussed above are examples. Various embodiments may omit, substitute, or add various procedures or components as appropriate. For instance, in alternative configurations, the methods described may be performed in an order different from that described, and/or various stages may be added, omitted, and/or combined. Also, features described with respect to certain embodiments may be combined in various other embodiments. Different aspects and elements of the embodiments may be combined in a similar manner. Also, technology evolves and, thus, many of the elements are examples that do not limit the scope of the disclosure to those specific examples.

Specific details are given in the description to provide a thorough understanding of the embodiments. However, embodiments may be practiced without these specific details. For example, well-known circuits, processes, algorithms, structures, and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the scope of the invention.

Also, some embodiments were described as processes depicted in a flow with process arrows. Although each may describe the operations as a sequential process, many of the operations can be performed in parallel or concurrently. In addition, the order of the operations may be rearranged. A process may have additional steps not included in the figure. Furthermore, embodiments of the methods may be implemented by hardware, software, firmware, middleware, microcode, hardware description languages, or any combination thereof. When implemented in software, firmware, middleware, or microcode, the program code or code segments to perform the associated tasks may be stored in a computer-readable medium such as a storage medium. Processors may perform the associated tasks.

For example, the above elements may merely be a component of a larger system, wherein other rules may take precedence over or otherwise modify the application of the invention. Also, a number of steps may be undertaken before, during, or after the above elements are considered. Accordingly, the above description does not limit the scope of the disclosure.

**Claims**

1. A method comprising:

   detecting (305) a gesture initiating command performed by a user with at least two control objects (130, 140) based on information from one or more detection devices (118);
   initiating (310) a gesture mode based on the detection of the gesture initiating command;
   detecting (315), based on information from the one or more detection devices (118), a substantially synchronized movement of the at least two control objects (130, 140) by maintaining a substantially synchronized relative position between the at least two control objects (130, 140) during the movement across a control plane substantially parallel to a surface on which a content is displayed;
   causing (320) the displayed content to be adjusted in response to the detection of the substantially synchronized movement of the at least two control objects (130, 140) across the control plane; and
   ending (325) the gesture mode by detecting, using information from the one or more detection devices (118), a disengagement motion;
   **characterized in that**
   detecting (315) the substantially synchronized movement is based on detected movements with a variation in the substantially synchronized relative position (220) between the at least two control objects (130, 140) within a variable tolerance threshold (224); the variable tolerance threshold varying based on a characteristic of the detected movements.

2. The method of claim 1 wherein detecting the disengagement motion comprises detecting that a movement of the at least two control objects (130, 140) relative to each other has exceeded the variable tolerance threshold (224).

3. The method of claim 2 wherein the variable tolerance threshold is defined by a difference between a minimum control object tolerance, a maximum control object tolerance, and a calibrating factor.

4. The method of claim 3 wherein the minimum control object tolerance is a minimum extension of a user hand; wherein the maximum control object tolerance is a maximum extension of the user hand; and wherein the calibrating factor is a variable that depends at least in part on the characteristic of the detected movements being a distance of the user hand from a neutral position.

5. The method of claim 3 wherein the calibrating factor is based on the characteristic of the detected movements being a stationary control object shake measurement associated with the user.

6. The method of claim 3 wherein the calibrating factor is based on the characteristic of the detected movements being a speed of the at least two control objects (130, 140).

7. The method of claim 6 wherein the speed of the at least two control objects (130, 140) is averaged over multiple control speed measurements to compensate for jitter.

8. The method of claim 1 wherein detecting the disengagement motion comprises detecting that one of the at least two control objects (130, 140) has been removed from the control plane.

9. The method of claim 1 wherein the at least two control objects (130, 140) comprise hands of the user, and the one or more detection devices (118) comprise a camera mounted to the user's head.

10. The method of claim 1 wherein the at least two control objects (130, 140) comprise hands of the user, and wherein the one or more detection devices (118) comprise hand mounted inertial sensors.

11. The method of claim 1 wherein detecting (305) the gesture initiating command comprises detecting, based on information from the one or more detection devices (118), that the at least two control objects (130, 140) have each been placed in a level position in the control plane parallel to the surface for a predetermined amount of time.

12. The method of claim 1 wherein the surface on which the content is displayed is a virtual surface created by a computing device and projected into a viewing area of the user.

13. The method of claim 1 wherein the surface on which the content is displayed is a physical surface; and/or wherein the gesture initiating command comprises a panning initiating command, wherein the gesture mode comprises a panning gesture mode, and wherein the disengagement motion comprises a panning disengagement motion.

14. A system comprising:

means for detecting a gesture initiating command performed by a user with at least two control objects (130, 140) based on information from one or more detection devices (118);
means for initiating a gesture mode based on the detection of the gesture initiating command;
means for detecting, based on information from the one or more detection devices (118), a substantially synchronized movement of the at least two control objects (130, 140) by maintaining a substantially synchronized relative position between the at least two control objects (130, 140) during the movement across a control plane substantially parallel to a surface on which a content is displayed;
means for causing the displayed content to be adjusted in response to the detection of the substantially synchronized movement of the at least two control objects (130, 140) across the control plane; and
means for ending the gesture mode by detecting, using information from the one or more detection devices (118), a disengagement motion;
**characterized in that**
detecting the substantially synchronized movement is based on detected movements with a variation in the substantially synchronized relative position (220) between the at least two control objects (130, 140) within a variable tolerance threshold (224); the variable tolerance threshold varying based on a characteristic of the detected movements.

15. A non-transitory computer readable instruction medium comprising computer readable instructions which, when executed by a processor in a device, cause the device to perform a method according to one of claims 1 to 13.

**Patentansprüche**

1. Ein Verfahren, das Folgendes aufweist:

   Detektieren (305) eines Gesteninitiierungsbefehls, der durch einen Nutzer mit wenigstens zwei Steuerobjekten (130, 140) durchgeführt wird basierend auf Information von einer oder mehreren Detektionseinrichtungen (118);
   Initiieren (310) eines Gestenmodus basierend auf der Detektion des Gesteninitiierungsbefehls;
   Detektieren (315), basierend auf Information von der einen oder den mehreren Detektionseinrichtungen (118), einer im Wesentlichen synchronisierten Bewegung der wenigstens zwei Steuerobjekte (130, 140) durch Beibehalten einer im Wesentlichen synchronisierten relativen Position zwischen den wenigstens zwei Steuerobjekten (130, 140) während der Bewegung über eine Steuerebene hinweg, die im Wesentlichen parallel zu einer Oberfläche ist,
   auf der einen Inhalt angezeigt wird;
   Veranlassen (320), dass der angezeigte Inhalt angepasst wird ansprechend auf die Detektion der im Wesentlichen synchronisierten Bewegung der wenigstens zwei Steuerobjekte (130, 140) über die Steuerebene hinweg; und
   Beenden (325) des Gestenmodus durch Detektieren, unter Verwendung von Information von der einen oder den mehreren Detektionseinrichtungen (118), einer Abkoppelungs- bzw. Loslösungsbewegung;
   **dadurch gekennzeichnet, dass**
   das Detektieren (315) der im Wesentlichen synchronisierten Bewegung auf detektierten Bewegungen mit einer Variation in der im Wesentlichen synchronisierten relativen Position (220) zwischen den wenigstens zwei Steuerobjekten (130, 140) innerhalb eines variablen Toleranzschwellenwertes (224) basiert;
   wobei der variable Toleranzschwellenwert basierend auf einer Charakteristik der detektierten Bewegungen variiert.

2. Verfahren nach Anspruch 1, wobei das Detektieren der Loslösungsbewegung Detektieren aufweist, dass eine Bewegung der wenigstens zwei Steuerobjekte (130, 140) relativ zueinander den variablen Toleranzschwellenwert (224) überschritten hat.

3. Verfahren nach Anspruch 2, wobei der variable Toleranzschwellenwert definiert wird durch eine Differenz zwischen einer minimalen Steuerobjekttoleranz, einer maximalen Steuerobjekttoleranz und einem Kalibrierungsfaktor.

4. Verfahren nach Anspruch 3, wobei die minimale Steuerobjekttoleranz eine minimale Ausstreckung einer Nutzerhand ist;
   wobei die maximale Steuerobjekttoleranz eine maximale Ausstreckung der Nutzerhand ist; und
   wobei der Kalibrierungsfaktor eine Variable ist, die wenigstens teilweise davon abhängt, dass die Charakteristik der detektierten Bewegungen eine Distanz der Nutzerhand von einer neutralen Position ist.

5. Verfahren nach Anspruch 3, wobei der Kalibrierungsfaktor darauf basiert, dass die Charakteristik der detektierten Bewegungen eine Messung eines Schüttelns eines stationären Steuerobjekts ist, die mit dem Nutzer assoziiert ist.

6. Verfahren nach Anspruch 3, wobei der Kalibrierungsfaktor darauf basiert, dass die Charakteristik der detektierten Bewegungen eine Geschwindigkeit der wenigstens zwei Steuerobjekte (130, 140) ist.

7. Verfahren nach Anspruch 6, wobei die Geschwindigkeit der wenigstens zwei Steuerobjekte (130, 140) über mehrere Steuergeschwindigkeitsmessungen gemittelt wird, um Schwankungen zu kompensieren.

8. Verfahren nach Anspruch 1, wobei das Detektieren der Loslösungsbewegung Detektieren aufweist, dass eines der wenigstens zwei Steuerobjekte (130, 140) von der Steuerebene entfernt worden ist.

9. Verfahren nach Anspruch 1, wobei die wenigstens zwei Steuerobjekte (130, 140) Hände des Nutzers aufweisen, und die eine oder die mehreren Detektionseinrichtungen (118) eine Kamera aufweisen, die auf dem Kopf des Nutzers befestigt ist.

10. Verfahren nach Anspruch 1, wobei die wenigstens zwei Steuerobjekte (130, 140) Hände des Nutzers aufweisen, und wobei die eine oder die mehreren Detektionseinrichtungen (118) an der Hand befestigte Inertialsensoren aufweisen.

11. Verfahren nach Anspruch 1, wobei das Detektieren (305) des Gesteninitiierungsbefehls Detektieren, basierend auf Information von der einen oder den mehreren Detektionseinrichtungen (118) aufweist, dass die wenigstens zwei Steuerobjekte (130, 140) in einer Position auf gleicher Höhe in der Steuerebene parallel zu der Oberfläche für eine vorbestimmte Zeitdauer platziert worden sind.

12. Verfahren nach Anspruch 1, wobei die Oberfläche, auf der der Inhalt angezeigt wird, eine virtuelle Oberfläche ist, die durch eine Rechnereinrichtung erzeugt wird und in einen Sichtbereich des Nutzers projiziert wird.

13. Verfahren nach Anspruch 1, wobei die Oberfläche, auf der der Inhalt angezeigt wird, eine physische Oberfläche ist; und/oder
wobei der Gesteninitiierungsbefehl einen Schwenkinitiierungsbefehl aufweist, wobei der Gestenmodus einen Schwenkgestenmodus aufweist, und wobei die Abkoppelungs- bzw. Loslösungsbewegung eine Schwenkloslösungsbewegung aufweist.

14. Ein System, das Folgendes aufweist:

Mittel zum Detektieren eines Gesteninitiierungsbefehls, der durch einen Nutzer mit wenigstens zwei Steuerobjekten (130, 140) durchgeführt wird, basierend auf Information von einer oder mehreren Detektionseinrichtungen (118);
Mittel zum Initiieren eines Gestenmodus basierend auf der Detektion des Gesteninitiierungsbefehls;
Mittel zum Detektieren, basierend auf Information von der einen oder den mehreren Detektionseinrichtungen (118), einer im Wesentlichen synchronisierten Bewegung der wenigstens zwei Steuerobjekte (130, 140) durch Beibehalten einer im Wesentlichen synchronisierten relativen Position zwischen den wenigstens zwei Steuerobjekten (130, 140) während der Bewegung über eine Steuerebene hinweg, die im Wesentlichen parallel zu einer Oberfläche ist, auf der einen Inhalt angezeigt wird;
Mittel zum Veranlassen, dass der angezeigte Inhalt angepasst wird ansprechend auf die Detektion der im Wesentlichen synchronisierten Bewegung der wenigstens zwei Steuerobjekte (130, 140) über die Steuerebene hinweg; und
Mittel zum Beenden des Gestenmodus durch Detektieren, unter Verwendung von Informationen von der einen oder den mehreren Detektionseinrichtungen (118), einer Abkoppelungs- bzw. Loslösungsbewegung; **dadurch gekennzeichnet, dass**
das Detektieren der im Wesentlichen synchronisierten Bewegung auf detektierten Bewegungen mit einer Variation in der im Wesentlichen synchronisierten relativen Position (220) zwischen den wenigstens zwei Steuerobjekten (130, 140) innerhalb eines variablen Toleranzschwellenwertes (224) basiert;
wobei der variable Toleranzschwellenwert basierend auf einer Charakteristik der detektierten Bewegungen variiert.

15. Ein nicht transitorisches computerlesbares Befehlsmedium, das von einem Computer lesbare Befehle aufweist, die, wenn sie durch einen Prozessor in einer Einrichtung ausgeführt werden, die Einrichtung veranlassen zum Durchführen eines Verfahrens gemäß einem der Ansprüche 1 bis 13.

**Revendications**

1. Procédé comprenant :

détecter (305) un mouvement initiant une commande effectué par un utilisateur avec au moins deux objets de contrôle (130, 140) à partir d'informations provenant d'un ou plusieurs appareils de détection (118) ;
initier (310) un mode de mouvement à partir de la détection du mouvement initiant une commande ;
détecter (315), à partir des informations provenant du ou des appareils de détection (118), un mouvement sensiblement synchronisé des au moins deux objets de contrôle (130, 140) en maintenant une position relative sensiblement synchronisée entre les au moins deux objets de contrôle (130, 140) pendant le mouvement à travers un plan de contrôle sensiblement parallèle à une surface sur laquelle un contenu est affiché ;

provoquer (320) l'ajustement du contenu affiché en réponse à la détection du mouvement sensiblement synchronisé des au moins deux objets de contrôle (130, 140) à travers le plan de contrôle ; et

terminer (325) le mode de mouvement en détectant, en utilisant les informations du ou des appareils de détection (118), un mouvement de désengagement ;

**caractérisée en ce que**

la détection (315) du mouvement sensiblement synchronisé est basée sur des mouvements détectés par une variation de la position relative sensiblement synchronisée (220) entre les au moins deux objets de contrôle (130, 140) avec un seuil (224) de tolérance variable ;

le seuil de tolérance variable variant selon une caractéristique des mouvements détectés.

2. Procédé selon la revendication 1, dans lequel la détection du mouvement de désengagement comprend la détection qu'un mouvement des au moins deux objets de contrôle (130,140) l'un par rapport à l'autre a dépassé le seuil de tolérance variable (224).

3. Procédé selon la revendication 2, dans lequel le seuil de tolérance variable est défini par une différence entre une tolérance d'objet de contrôle minimale, une tolérance d'objet de contrôle maximale, et un facteur de calibration.

4. Procédé selon la revendication 3, dans lequel la tolérance d'objet de contrôle minimale est une extension minimale de la main d'un utilisateur ;

dans lequel la tolérance d'objet de contrôle maximale est une extension maximale de la main de l'utilisateur ; et

dans lequel le facteur de calibration est une variable dépendant au moins partiellement de la caractéristique des mouvements détectés comme étant une distance entre la main de l'utilisateur une position neutre.

5. Procédé selon la revendication 3, dans lequel la caractéristique des mouvements détectés sur laquelle est basé le facteur de calibration est une mesure de tremblement d'un objet de contrôle stationnaire associé à l'utilisateur.

6. Procédé selon la revendication 3, dans lequel dans lequel la caractéristique des mouvements détectés sur laquelle est basé le facteur de calibration est une vitesse des au moins deux objets de contrôle (130, 140).

7. Procédé selon la revendication 6, dans lequel la vitesse des au moins deux objets de contrôle (130, 140) est moyenné sur une pluralité de mesures de vitesse de contrôle pour compenser la gigue.

8. Procédé selon la revendication 1, dans lequel la détection du mouvement de désengagement comprend la détection qu'un des au moins deux objets de contrôle (130, 140) a été retiré du plan de contrôle.

9. Procédé selon la revendication 1, dans lequel les au moins deux objets de contrôle (130, 140) comprennent des mains de l'utilisateur, et le ou les appareils de détection (118) comprennent une caméra montée sur la tête de l'utilisateur.

10. Procédé selon la revendication 1, dans lequel les au moins deux objets de contrôle (130, 140) comprennent les mains de l'utilisateur, et dans lequel le ou les appareils de détection (118) comprennent des capteurs inertiels montés sur les mains.

11. Procédé selon la revendication 1, dans lequel la détection (305) du mouvement initiant une commande comprend détecter, à partir des informations provenant du ou des appareils de détection (118), que chacun des au moins deux objets de contrôle (130,140) a été placé dans une position horizontale dans le plan de contrôle parallèlement à la surface durant un temps prédéterminée.

12. Procédé selon la revendication 1, dans lequel la surface sur laquelle le contenu est affiché est une surface virtuelle créée par un appareil informatique et projetée sur une zone de visualisation de l'utilisateur.

13. Procédé selon la revendication 1, dans lequel la surface sur lequel le contenu est affiché est une surface physique ; et/ou

dans lequel le mouvement initiant une commande comprend une commande initiant un mouvement panoramique, dans lequel le mode de mouvement comprend un mode de mouvement panoramique, et dans lequel le mouvement de désengagement comprend un mouvement de désengagement panoramique.

14. Système comprenant :

des moyens pour détecter un mouvement initiant une commande effectué par un utilisateur avec au moins deux objets de contrôle (130, 140) à partir d'informations provenant d'un ou plusieurs dispositifs de détection (118) ;
des moyens pour initier un mode de mouvement à partir de la détection du mouvement initiant une commande ;
des moyens pour détecter, à partir d'informations provenant du ou des appareils de détection (118), un mouvement sensiblement synchronisé des au moins deux objets de contrôle (130, 140) en maintenant une position relative sensiblement synchronisée entre les au moins deux objets de contrôle (130, 140) pendant le mouvement à travers un plan de contrôle sensiblement parallèle à une surface sur laquelle un contenu est affiché ;
des moyens pour provoquer l'ajustement du contenu affiché en réponse à la détection du mouvement sensiblement synchronisé des au moins deux objets de contrôle (130,140) à travers le plan de contrôle ; et
des moyens pour terminer le mode de mouvement en détectant, en utilisant les informations du ou des appareils de détection (118), un mouvement de désengagement ;
**caractérisée en ce que**
la détection du mouvement sensiblement synchronisé est basée sur des mouvements détectés avec une variation dans la position relative sensiblement synchronisée (220) entre les au moins deux objets de contrôle (130, 140) avec un seuil de tolérance variable (224) ;
le seuil de tolérance variable variant selon une caractéristique des mouvements détectés.

15. Support d'instructions lisibles par ordinateur non transitoire comprenant des instructions lisibles par ordinateur qui, quand elles sont exécutées par un processeur dans un dispositif, provoquent la mise en oeuvre par le dispositif d'un procédé selon l'une quelconque des revendications 1 à 13.

FIG. 1A

FIG. 1B

EP 2 972 672 B1

Camera
118

Computing device

108

114

Televison Display

Second
control object
140

First control
object 130

FIG. 1C

210

FIG. 2A

FIG. 2B

FIG. 2C

305 — Detecting a gesture initiating command performed by at least two control objects based on information from one or more detection devices

310 — Initiating a gesture mode based on the detection of the gesture initiating command

315 — Detecting, based on information from the one or more detection devices, substantially synchronized movement of the at least two control objects across a control plane substantially parallel to a surface on which content is displayed

320 — Causing the displayed content to be adjusted in response to the detection of the substantially synchronized movement of the at least two control objects across the control plane

325 — Ending the gesture mode by detecting, using information from the one or more detection devices, a disengagement motion

FIG. 3

400

410

Image Capture Module

460

Display Output Module

420

Processing Module

430

Computer-Readable
Storage Medium

450

Content
Control
Module

440

Gesture
Analysis
Module

FIG. 4

FIG. 5A

FIG. 5B

FIG. 6

**EP 2 972 672 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009146951 A1
- US 2012249416 A1
- US 2012218203 A1